# EUROPEAN PATENT APPLICATION

(11) **EP 1 950 966 A1**
(43) Date of publication of application: **30.07.2008**
(21) Application number: 06715560.6
(22) Date of filing: 10.03.2006
(51) Int. Cl.: H04N 7/173, H04N 5/76, H04N 5/765

(54) **BROADCAST PROGRAM RECORDING/PLAYING SYSTEM, PORTABLE TERMINAL AND VIDEO RECORDER**

(30) Priority: 17.11.2005 JP 2005332943
(71) Applicant: MATSUSHITA ELECTRIC INDUSTRIAL CO., LTD., Osaka 571-8501 (JP)
(72) Inventor: FURUYAMA, Hiroshi, c/o Matsushita El. Ind. Co., Ltd., IPROC, Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2006/304790
(87) International publication number: WO 2007/057991

(57) **Abstract**

The present invention aims at providing an environment in which user's convenience can be enhanced remarkably by causing functions provided to a mobile terminal and a video recording device to cooperate closely with each other such that video recording and playback can be carried out flexibly in a variety of ways unlike the prior art and also a user can enjoy more comfortably digital television broadcastings containing the terrestrial digital broadcasting.

A mobile terminal 1 that can receive digital television broadcasting and a video recording device 3 are connected via a communication network 2, and receiving channel information and a video recording start command are transmitted from the mobile terminal 1 to the video recording device 3. The video recording device 3 acquires program information by an electronic program guide (EPG) and performs the video recording of the program. Also, a save command of inhibiting an erasure of the video-recorded program can be transmitted to the video recording device 3 equipped with a video server function from the mobile terminal 1. The program data played by the video recording device 3 can also be played on the mobile terminal 1.

## Description

### <Technical Field>

The present invention relates to a video program recording/playing system constructed such that a video recording device that can receive and record the digital broadcasting in which the electronic program guide (abbreviated to "EPG" hereinafter) data are multiplexed into video and audio information and a mobile terminal that that can receive the digital broadcasting are connected in a one-way or two-way communication mode, and a mobile terminal and a video recording device as constituent elements of this system.

### <Background Art>

The so-called "one-segment" broadcasting for the mobile terminal was started from April 2006. The one-segment broadcasting signifies the terrestrial digital broadcasting directed to the mobile terminal. More particularly, according to the one-segment broadcasting, a 6 MHz band of the terrestrial digital broadcasting is divided into 13 segments such that one-segmentment out of them (one-segment) is used as the mobile terminal dedicated channel, so that a user can look and listen the terrestrial digital broadcasting by the mobile terminal.

Further, the video recording/playing devices (the video recorder using the DVD or the hard disc, and the like) being compatible with the terrestrial digital broadcasting have already been put on the market.

Further, the video program recording system utilizing the mobile terminal and the video program recording device has been proposed in the prior art (see Patent Literature 1).

In the video program recording system set forth in this Patent Literature 1, the mobile terminal gets of information of the channel number through which the user is receiving the program now from a receiving radio wave and then sends information of the channel number to the video program recording device via E-mail, while the video program recording device video-records the program on the channel number indicated by E-mail. Accordingly, the user can video-record immediately the television program that such user is viewing currently on the mobile terminal by remote control.
Patent Literature 1: JP-A-2005-252843

### <Disclosure of the Invention>

### <Problems that the invention is to Solve>

In the prior art set forth in Patent Literature 1, the mobile terminal side must get the channel number and then send information of the channel number via E-meil, Hence, there's no denying that a burden on the mobile terminal side becomes heavy.

Further, this prior art does not depend on the assumption that the digital broadcasting should be received. Therefore, the user cannot enjoy various advantages provided exclusively to the digital broadcasting.

Further, in this prior art, the user can cause the video program recording device merely to execute immediately the video recording of the program by remote control from the mobile terminal. Conversely, the user can execute nothing except that such user can cause the video program recording device to execute the video recording at once by remote control. As a result, the user cannot execute at all the higher control such that functions provided to the mobile terminal and the video program recording device are caused to cooperate closely with each other, and others.

The present invention has been made based on such considerations, and it is an object of the present invention to provide an environment in which user's convenience can be enhanced remarkably by causing functions provided to a mobile terminal and a video recording device to cooperate closely with each other such that video recording and playback can be carried out flexibly in a variety of ways unlike the prior art and a user can enjoy more comfortably digital television broadcastings containing the terrestrial digital broadcasting.

### <Means for Solving the Problems>

A video program recording/playing system of the present invention constructed such that a video recording device that can receive and record a digital broadcasting in which electronic program guide (EPG) data are multiplexed with video and audio information and a mobile terminal that can receive the digital broadcasting are connected in a one-way or two-way communication mode, wherein the mobile terminal transmits information containing receiving channel information used to operate the video recording device to the video recording device, and the video recording device refers the receiving channel sent from the mobile terminal, specifies the program based on the electronic program guide (EPG) data, and executes at least one of a process of video-recording the specified program, a process of saving recorded data, a process of playing the program, and a process of transmitting the played program data to the mobile terminal device.

In the video program recording/playing system of the present invention, both the mobile terminal and the video recording device can utilize the EPG that is multiplexed on a radio wave of the digital broadcasting. Respective information of channel information, program title, program start time, and program end time are contained in the EPG. Thus, in the system of the present invention, the receiver side can specify the program for itself and know a start time and an end time only by transmitting the channel information from the transmitter side. Therefore, an amount of information to be transmitted can be reduced, and a burden on the side for transmitting the information can be lessened. In particular, such advantages are achieved that, because a burden on the mobile terminal can be lessened, a battery life can be prolonged and a reduction in size and weight of the mobile terminal can be promoted. Further, the video recording device that can deal with the digital broadcasting has various higher functions than those of the analog broadcasting-compatible device in the prior art. Therefore, a wide variety of flexible video recordings and playbacks unlike the prior art can be implemented by causing functions provided to the mobile terminal and the video recording device to cooperate closely with each other, and accordingly user's convenience can be improved remarkably, As a result, such an environment can be provided that the user can enjoy more comfortably the digital television broadcasting containing terrestrial digital broadcasting.

Further, in one mode of the video program recording/playing system of the present invention, when a user of the mobile terminal executes a device operation to instruct the video recording device to start the video recording, the mobile terminal transmits the receiving channel information and a video recording start command to the video recording device, and the video recording device refers the receiving channel information sent from the mobile terminal, specifies the program based on the electronic program guide (EPG) data, decides a broadcast end time of the specified program, and executes automatically the video recording of the program and an end of the program.

While the user is viewing the television broadcasting by the mobile terminal, the user can video-record the continuation of the program that such user is viewing on the video recording device by remotely controlling the video recording device in response to the user's device operation. Even though the user of the mobile terminal cannot continue a viewing of the program for any reason, such user can play and view the continuation of the program by the video recording device after such user goes user's own home, Since only the transmission of the receiving channel information and the video recording start command is required upon remotely controlling the video recording device from the mobile terminal, an amount of information to be transmitted can be reduced and thus a burden on the mobile terminal can be lessened. As a result, this system can contribute to prolongation of a battery life and a reduction in size and weight of the mobile terminal.

Further, in another mode of the video program recording/ playing system of the present invention, when the mobile terminal detects occurrence of a predetermined event, the mobile terminal transmits the receiving channel information and a video recording start command to the video recording device, and the video recording device refers the receiving channel information sent from the mobile terminal, specifies the program based on the electronic program guide (EPG) data, decides a broadcast end time of the specified program, and executes automatically the video recording of the program and an end of the program.

When the mobile terminal detects that a predetermined event (e.g., an event that acts as an interrupting cause of the television viewing such as reduction in a receiving level; reduction in a remaining battery life, call arrival, mail arrival, talking start, or the like) occurs unless the user makes no device operation, such mobile terminal transmits automatically the receiving channel information and the video recording start command to the video recording device to cause the video recording device to video-record the television program that the user is viewing at that point of time. Therefore, when the viewing of the program is interrupted because of the call arrival while the user is viewing the television program on the mobile terminal, the video recording is executed automatically by the video recording device and thus the user can look and listen the television program after the interruption without fail after such user goes user's own home, Further, since the user of the mobile terminal 1 is not required to execute the particular device operation, user's burden is not increased. As a result, the user's convenience of the mobile terminal can be improved,

Further, in another mode of the video program recording/ playing system of the present invention, the predetermined event is any one of a reduction in a receiving level, a call arrival, a mail arrival, and a talking start.

Therefore, even when the user cannot but interrupt the viewing inevitably while such user is watching the television program on the mobile terminal, the user can view the continuation of the program surely in the user's own home. As a result, the user's convenience of the mobile terminal can be improved.

Further, in another mode of the video program recording/ playing system of the present invention, when the video recording device is executing a preset video recording at a, point of time the video recording device received the video recording start command from the mobile terminal, the video recording device transmits channel information in a preset video recording to the mobile terminal, the mobile terminal refers the transmitted channel information in the preset video recording, acquires program information based on the electronic program guide (EPG) data, and offers the acquired program information to the user, and then retransmits the video recording start command to the video recording device when the user decides that the video recording start command being sent previously takes precedence as a result of the offer, and the video recording device, when received a retransmission of the video recording start command, stops the preset video recording, and starts a video program recording in compliance with the video recording start command sent from the mobile terminal.

Sometimes such a situation is brought about that, only when the video recording start command is transmitted one-sidedly from the mobile terminal to the video recording device, this video recording competes with the video recording setting preset in the video recording device. In such case, in the present embodiment, the video recording device transmits the information to the mobile terminal to cause the user to execute mediation for himself or herself such that the user can video-record the program that the user desires truly without fail. In other words, when the video recording device is carrying out the preset video recording at a point of time when the video recording device receives the video recording start command from the mobile terminal, the video recording device transmits the channel information of the program being video-recorded now to the mobile terminal. The mobile terminal specifies the program by utilizing the EPG, gets the program information, offers the program information to the user, and causes the user to decide which program should be selected, When the user decides that the video recording of the program that user is viewing on the mobile terminal should be selected, the mobile terminal retransmits the video recording start command to the video recording device. Accordingly, the video recording device video-records the program instructed by the video recording start command preferentially. As a result, the user can video-record the program that the user desires truly without fail.

Further, in another mode of the video program recording/ playing system of the present invention, when the video recording device receives the video recording start command from the mobile terminal and a broadcast time zone of the program instructed by the video recording start command overlaps with a time zone of the preset video recording setting, the video recording device transmits the channel information of the program requested by the preset video recording setting to the mobile terminal, the mobile terminal refers the transmitted channel information of the program requested by the preset video recording setting, acquires program information based on the electronic program guide (EPG) data, and offers the acquired program information to the user, and then transmits the video recording setting cancel command to the video recording device when the user decides that the video recording start command being sent previously takes precedence as a result of the offer or transmits the video recording end command to the video recording device when the user decides that the preset video recording setting takes precedence, and the video recording device cancels the preset video recording setting and starts the video recording of the program in compliance with the video recording start command from the mobile terminal when the video recording device received the video recording setting cancel command from the mobile terminal, and invalidates the video recording start command being received in advance and ends the video recording when the video recording device received the video recording end command from the mobile terminal.

When the video recording setting is set in the video recording device at a point of time when the video recording device receives the video recording start command from the mobile terminal and a time zone of the video recording setting overlaps with a broadcast time zone of the program instructed by the video recording start command, the video recording device cannot understand which program should be video-recorded preferentially. For this reason, the video recording-device transmits the channel information of the program for the preset video recording to the mobile terminal. The mobile terminal specifies the program by utilizing the EPG, and then gets the program information, and offers necessary information to the user, and then causes the user to decide which program should be selected preferentially. When the user decides that the video recording of the program being viewed now by the mobile terminal should take precedence, the mobile terminal transmits a preset video recording cancel command. In contrast, when the user decides that the preset video recording should take precedence, the mobile terminal transmits a video recording end command to invalidate the previously transmitted video recording start command and then end the video recording, As a result, the user can video-record the program that the user desires truly without fail.

Further, in another mode of the video program recording/ playing system of the present invention, when the video recording device receives the video recording start command from the mobile terminal and a rear end portion of a broadcast time zone of the program instructed by the video recording start command containing an end time point overlaps with a front end portion of a time zone of the preset video recording setting containing a start time point, the video recording device transmits the channel information of the program requested by the preset video recording setting to the mobile terminal, the mobile terminal refers the transmitted channel information of the program requested by the preset video recording setting, acquires program information based on the electronic program guide (EPG) data, and offers the acquired program information to the user, and then retransmits the corrected video recording start time of the program requested by the preset video recording setting or the corrected video recording end time of the program instructed by the video recording start command when the user corrects the video recording start time of the program requested by the preset video recording setting as a result of the offer or when the user corrects the video recording end time of the program instructed by the video recording start command, and when the video recording device received the corrected video recording start time of the program requested by the preset video recording setting or the corrected video recording end time of the program instructed by the video recording start command from the mobile terminal, the video recording device corrects correspondingly the video recording start time of the program requested by the preset video recording setting or the video recording end time of the program instructed by the video recording start command.

When a broadcasting time zone of the program requested by the video recording start command and a time zone of the program of the preset recording overlap with each other, a chance to adjust the video, recording start or end time can be given to the user in the present embodiment to record both programs while solving flexibly the overlapping of time zones. That is, when the latter half portion of the program instructed by the video recording start command and the former half portion of the program of the video recording preset overlap partially with each other, either the process of ending the program requested by the video recording start command a little early or the process of starting the preset video recording a little later can be carried out by the device operation made by the user himself or herself, so that the user can adjust the overlapping of the time zone flexibly. Accordingly, the user can enjoy both programs later, and user's convenience can be improved remarkably.

Further, in another mode of the video program recording/ playing system of the present invention, the video recording device accumulates video recording data of more than two programs or all programs out of the programs whose broadcast time zones overlap with each other on a plurality of channels in a program recording portion, and has a function of executing a process of increasing a free capacity by erasing automatically accumulated video recording data when a free space of the program recording portion is reduced, when the user of the mobile terminal performs a device operation to instruct the video recording device to save the program data, the mobile terminal transmits the receiving channel information and a program save command to the video recording device, when the video recording device received the receiving channel information and the program save command sent from the mobile terminal, the video recording device refers the receiving channel information, specifies the program based on the electronic program guide (EPG) data, decides a broadcast start time and a broadcast end time of the specified program, and removes the video recording data of the program recorded in the program recording portion from a list of automatic erased objects,

Out of the video recording devices that are compatible with the digital broadcasting, there are some recording devices that can accumulate program data of more than two programs or all programs out of the programs on a plurality of channels whose broadcasting time zones overlap mutually in a program recording portion (this type video recording device is called a "video server"). In such video recording device, the process of increasing a free capacity by erasing the accumulated video recording data automatically is executed in a situation that a free space of the program recording portion is reduced. If the video recording device having a video server function capable of accumulating all programs being broadcasted in the same time period, for example, is utilized as the video recording device constituting the video program recording/ playing system of the present invention, there is no need to transmit the video recording start command from the mobile terminal. However, it may unexpectedly happen that data of the program, which is viewed now on the mobile terminal and a viewing of which is interrupted in the middle, is erased by the erasing process to keep a capacity in the video recording device. Therefore, in the present embodiment, the user executes save (inhibit of erase) of the recorded program data by executing remote control from the mobile terminal 1. Therefore, the user can view and enjoy the program a viewing of which by the mobile terminal is interrupted without fail after the user goes user's own home in which the video recording device 3 is put, As a result, user's convenience can be improved remarkably.

Further, in another mode of the video program recording/ playing system of the present invention, the video recording device accumulates video recording data of more than two programs or all programs out of the programs whose broadcast time zones overlap with each other on a plurality of channels in a program recording portion, and has a function of executing a process of increasing a free capacity by erasing automatically accumulated video recording data when a free space of the program recording portion is reduced, when the user of the mobile terminal performs a device operation to instruct the video recording device to execute a time-shift playback, the mobile terminal transmits the receiving channel information and a time-shift play command to the video recording device, when the video recording device received the receiving channel information and the time-shift play command sent from the mobile terminal, the video recording device refers the receiving channel information, specifies the program based on the electronic program guide (EPG) data, decides a broadcast start time and a broadcast end time of the specified program, plays the video recording data from a start point of time of the program recorded in the program recording portion, encodes playback data in a predetermined format, and transmits encoded data to the mobile terminal, and the mobile terminal receives the playback data sent from the video recording device and encoded into a predetermined format, and decodes the encoded data such that the user of the mobile terminal is able to view the program.

A program viewing function of the mobile terminal and a program playing function of the video recording device (having a video server function) are caused to cooperate with each other, and then the program data played by the video recording device are transmitted to the mobile terminal such that the user can view the program on the mobile terminal, The user of the mobile terminal viewed some television program from the middle but this user wishes to view this program from the beginning since the contents of this program is interesting to the user. In this case, the user can receive the playback data from the video recording device by utilizing the above function, and can view the program from the beginning on the mobile terminal. As a result, user's convenience can be improved remarkably.

Further, in another mode of the video program recording/ playing system of the present invention, the video recording device accumulates video recording data of more than two programs or all programs out of the programs whose broadcast time zones overlap with each other on a plurality of channels in a program recording portion, and has a function of executing a process of increasing a free capacity by erasing automatically accumulated video recording data when a free space of the program recording portion is reduced, when the user of the mobile terminal performs a device operation to instruct the video recording device to execute a time-shift/skip playback of the program on the currently receiving channel, the mobile terminal transmits the receiving channel information, a time-shift/skip play command, and receiving start time information of the receiving channel to the video recording device, when the video recording device received the receiving channel information and the time-shift/skip play command sent from the mobile terminal, the video recording device refers the receiving channel information, specifies the program based on the electronic program guide (EPG) data, decides a broadcast start time and a broadcast end time of the specified program, plays the video recording data from a start point of time of the program recorded in the program recording portion, performs a skip playback of the video recording data in a time period from the receiving start time indicated by the receiving start time information received from the mobile terminal to a time at which the time-shift/skip play command is received, encodes playback data in a predetermined format, and transmits encoded data to the mobile terminal, and the mobile terminal receives the playback data sent from the video recording device and encoded into a predetermined format, and decodes the encoded data such that the user of the mobile terminal is able to view the program.

The program viewing function of the mobile terminal and the program playing function of the video recording device (having the video server function) are caused to cooperate with each other, and then the program data being played by the video recording device are transmitted to the mobile terminal such that the user can view the program on the mobile terminal. At that time, the already-viewed interval is skipped (or fast-forward played) and the program contents in the unviewed portion can be viewed effectively and predominantly. The mobile terminal transmits the receiving channel information, the time-shift/skip play command, and the receiving start time information of the receiving channel. Since the user of the mobile terminal has already viewed the interval from a time indicated by the receiving start time information to a time at which the time-shift/skip play command is received, the playback of the already-viewed interval is skipped (or fast-forward played) in the video recording device, and then the video recording device transmits the playback data to the mobile terminal. Therefore, the user can view enjoy the program that the user feels interesting after viewed from the middle from the beginning. Since the already-viewed interval is skipped (or fast-forward played), a waste viewing time can be reduced and can view very effectively the program. As a result, user's convenience can be improved remarkably.

Further, in the video program recording/playing system of the present invention, the video recording device and the mobile terminal are connected via a communication network,

The close cooperation between both devices can be accomplished by utilizing the network connecting function (e.g., a function of connecting the Internet) that both the mobile terminal and the video recording device have. Accordingly, various flexible video recording/playing controls unlike the prior art can be carried out, and user's convenience regarding the viewing of the contents of the digital broadcasting can be improved.

Further, in the video program recording/playing system of the present invention, the video recording device and the mobile terminal are connected directly by utilizing near field communication.

The direct information transfer can be carried out between the mobile terminal and the video recording device by utilizing near field communication such as infrared communication, or the like. For example, such a situation may occur that the user of the mobile terminal executes the process of saving (inhibiting an erasure) of the predetermined recorded program data after such user goes back user's own home where the video recording device having a video server function is put. At this time, the device operation is more simple and convenient by transmitting directly a program save command (a command for inhibiting a deletion of program data) from the mobile terminal to the video recording device than by transmitting the program save command via the network. Therefore, directly transmission of the information by using the near field communication is made possible. As a result, user's convenience can be improved further.

Further, a mobile terminal of the present invention capable of receiving digital broadcasting, as a constituent element of the video program recording/playing system, includes a digital broadcast receiving portion; and a controlling portion for executing an operation to transmit the receiving channel information and either of the video recording start command, the save command, the time-shift play command, and the time- shift/skip play command to the video recording device.

The close cooperation of the mobile terminal with the video recording device can be attained by using the mobile terminal of the present invention. Thus, a wide variety of flexible video recordings and playbacks unlike the prior art can be implemented, and user's convenience can be improved remarkably. The user of the mobile terminal can fully enjoy the one-segment broadcasting. As a result, such an environment can be provided easily that the user can enjoy more comfortably the digital television broadcasting (containing terrestrial digital broadcasting).

Further, a video recording device of the present invention capable of receiving digital broadcasting, as a constituent element of the video program recording/playing system, includes a digital broadcast receiving portion; a controlling portion for specifying the program based on the receiving channel information and either of the video recording start command, the save command, the time-shift play command, and the time- shift/skip play command sent from the mobile terminal, and executing at least one of a process of video-recording the specified program, a process of saving the video-recorded data, a process of playing the program, and a process of transmitting playback data of the program to the mobile terminal; and a recording portion for recording the program data received by the digital broadcast receiving portion.

By using the video recording device of the present invention, the cooperation with the mobile terminal that is able to look and listen the one-segment broadcasting can be attained. In the mobile terminal of which a reduction in size and weight is required, it is difficult to realize a high-definition video recording or a long-time video recording of the television broadcasting. However, the weak points of the mobile terminal can be compensated for by using the video recording device of the present invention. In addition, a wide variety of flexible video recordings and playbacks unlike the prior art can be implemented by providing the close cooperation with the mobile terminal, and accordingly user's convenience can be improved remarkably. As a result, such an environment can be provided easily that the user can enjoy more comfortably the digital television broadcasting (containing terrestrial digital broadcasting).

### Advantages of the invention

According to the video program recording/playing system of the present invention, an amount of information to be transmitted can be reduced by utilizing the EPG data. In particular, such advantages are achieved that, because a burden on the mobile terminal can be lessened, a battery life can be prolonged and a reduction in size and weight of the mobile terminal can be promoted.

Further, the video recording device that can deal with the digital broadcasting has various higher functions than those of the analog broadcasting-compatible device in the prior art. Therefore, a wide variety of flexible video recordings and playbacks unlike the prior art can be implemented by causing functions provided to the mobile terminal and the video recording device to cooperate closely with each other, and accordingly user's convenience can be improved remarkably.

Further, by using the mobile terminal of the present invention, a close cooperation with the video recording device can be attained. Therefore, a wide variety of flexible video recordings and playbacks unlike the prior art can be implemented, and user's convenience can be improved remarkably, The user of the mobile terminal can fully enjoy the one-segment broadcasting.

Further, the cooperation with the mobile terminal that can look and listen the one-segment broadcasting can be realized by using the video recording device of the present invention. In the mobile terminal of which a reduction in size and weight is severely required, it is difficult to realize a high-definition video recording or a long-time video recording of the television broadcasting. However, by using the video recording device of the present invention, the weak points of the mobile terminal can be compensated for. In addition, a wide variety of flexible video recordings and playbacks unlike the prior art can be implemented by providing the close cooperation with the mobile terminal, and accordingly user's convenience can be improved remarkably.

According to the present invention, such an environment can be provided easily that the user can enjoy more comfortably the digital television broadcasting (containing terrestrial digital broadcasting).

### <Brief Description of the Drawings>

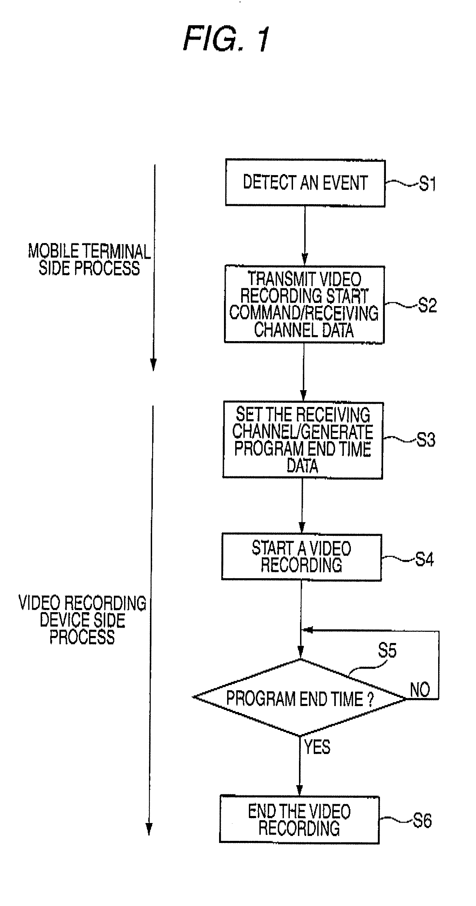

FIG.1 is a flowchart showing procedures of the basic process in a video program recording/playing system of the present invention.

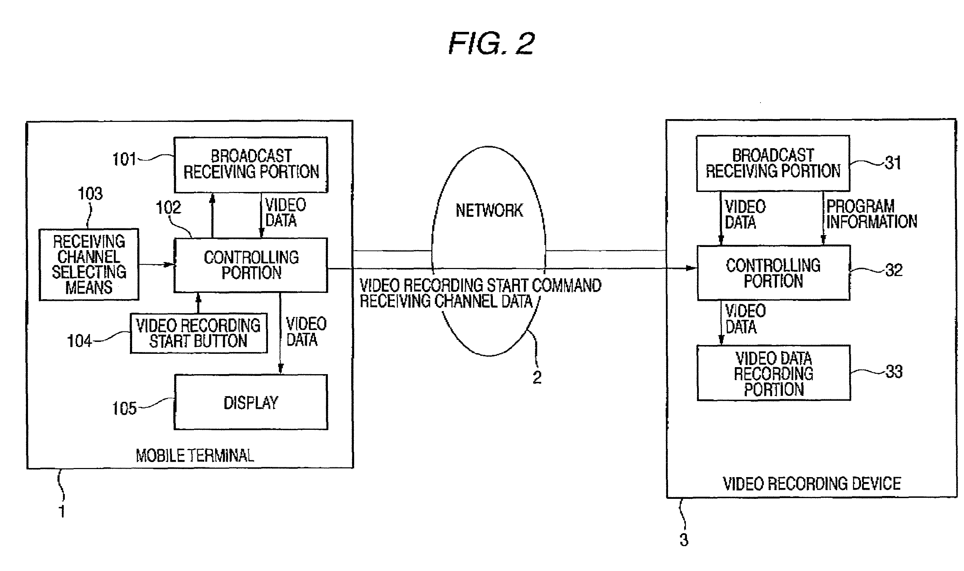

FIG.2 is a block diagram showing an example of concrete configurations (example where the video recording is started by remote control when a video recording start command is transmitted from a mobile terminal to a video recording device based on user's device operation acting as a trigger) of the video program recording/playing system of the present invention.

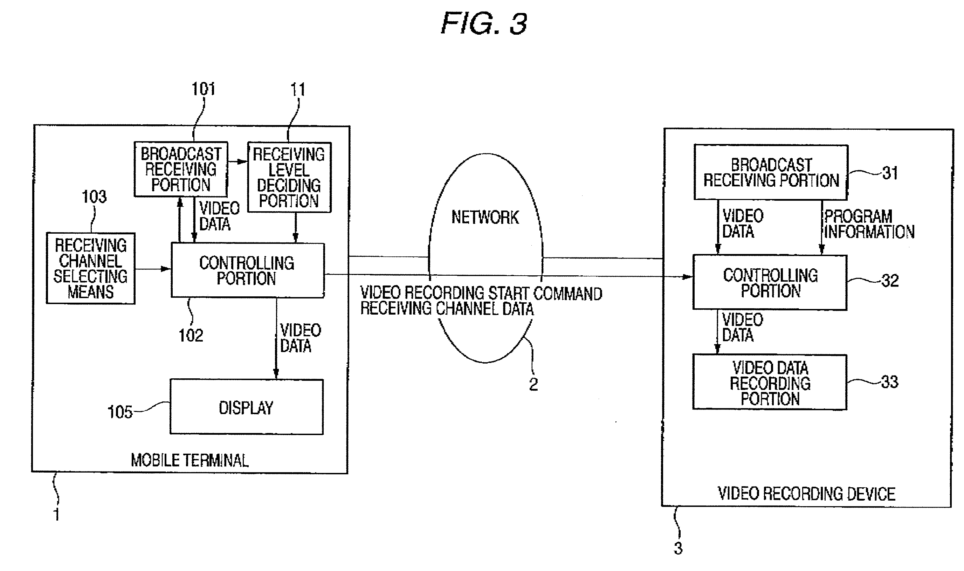

FIG.3 is a block diagram showing an example of concrete configurations (example where the video recording is started by remote control when a video recording start command is transmitted from a mobile terminal to a video recording device based on a detection of a reduction in receiving level acting as a trigger) of the video program recording/playing system of the present invention.

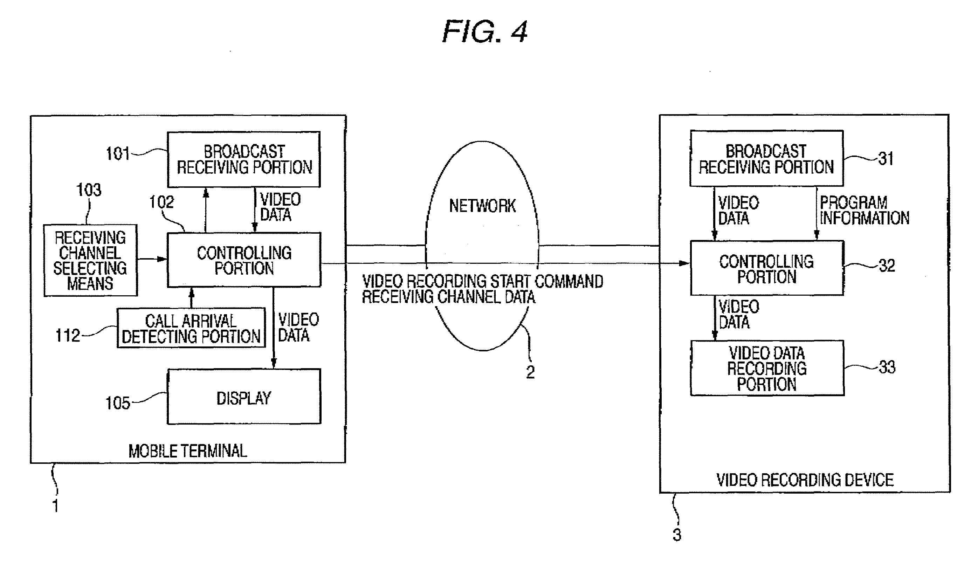

FIG 4 is a block diagram showing an example of concrete configurations (example where the video recording is started by remote control when a video recording start command is transmitted from a mobile terminal to a video recording device based on a detection of a call arrival acting as a trigger) of the video program recording/playing system of the present invention.

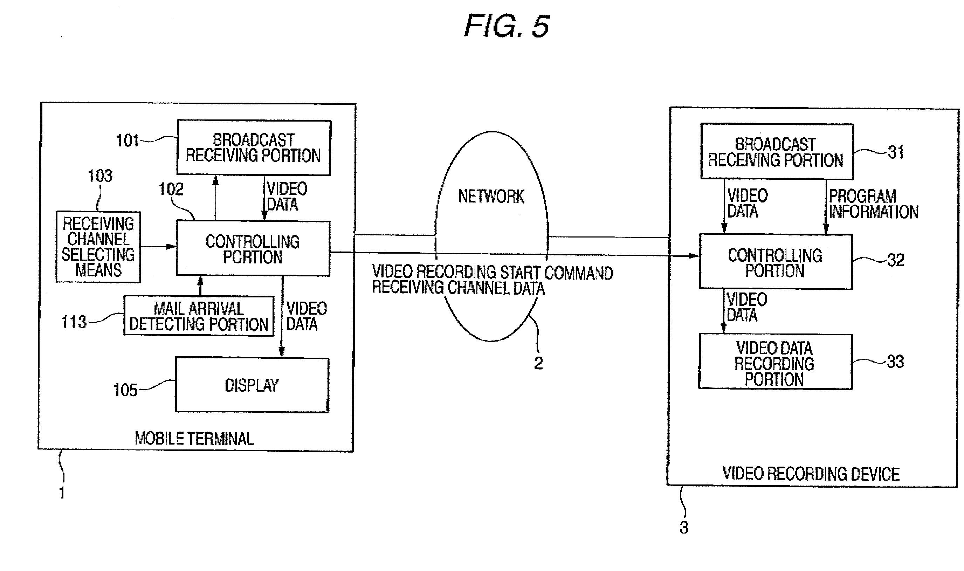

FIG. 5 is a block diagram showing an example of concrete configurations (example where the video recording is started by remote control when a video recording start command is transmitted from a mobile terminal to a video recording device based on a detection of an E-mail arrival acting as a trigger) of the video program recording/playing system of the present invention.

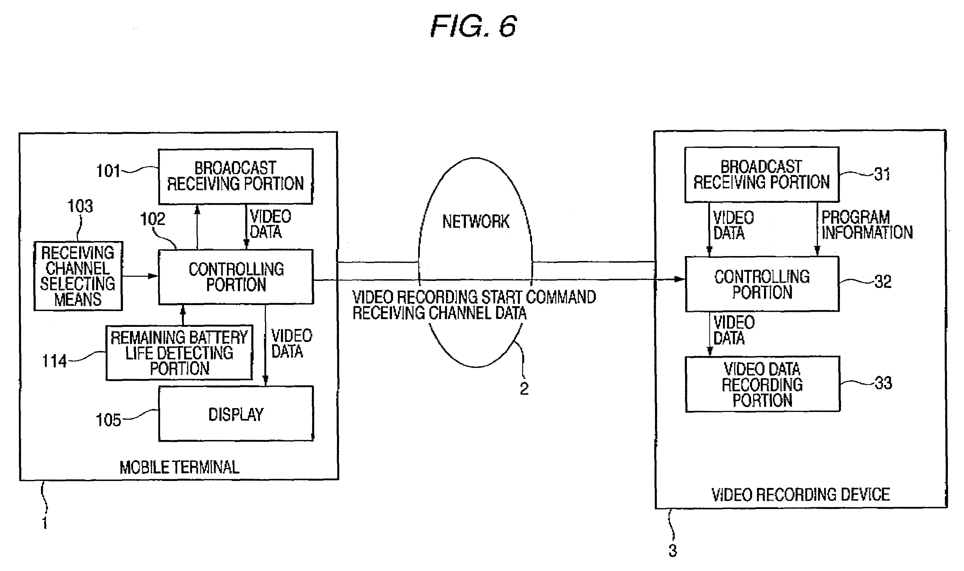

FIG.6 is a block diagram showing an example of concrete configurations (example where the video recording is started by remote control when a video recording start command is transmitted from a mobile terminal to a video recording device based on a detection of a remaining battery life acting as a trigger) of the video program recording/playing system of the present invention.

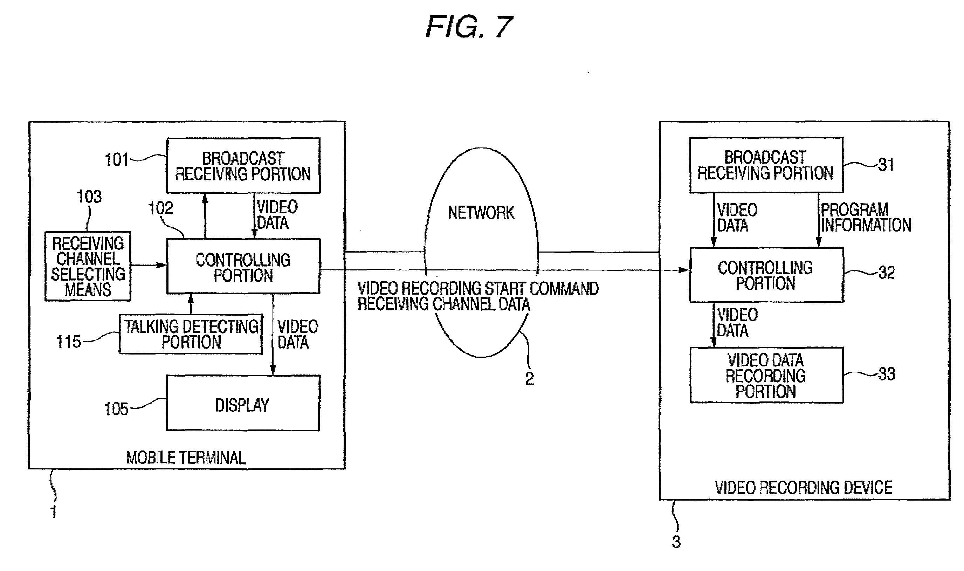

FIG.7 is a block diagram showing an example of concrete configurations (example where the video recording is started by remote control when a video recording start command is transmitted from a mobile terminal to a video recording device based on a detection of a talking start acting as a trigger) of the video program recording/playing system of the present invention.

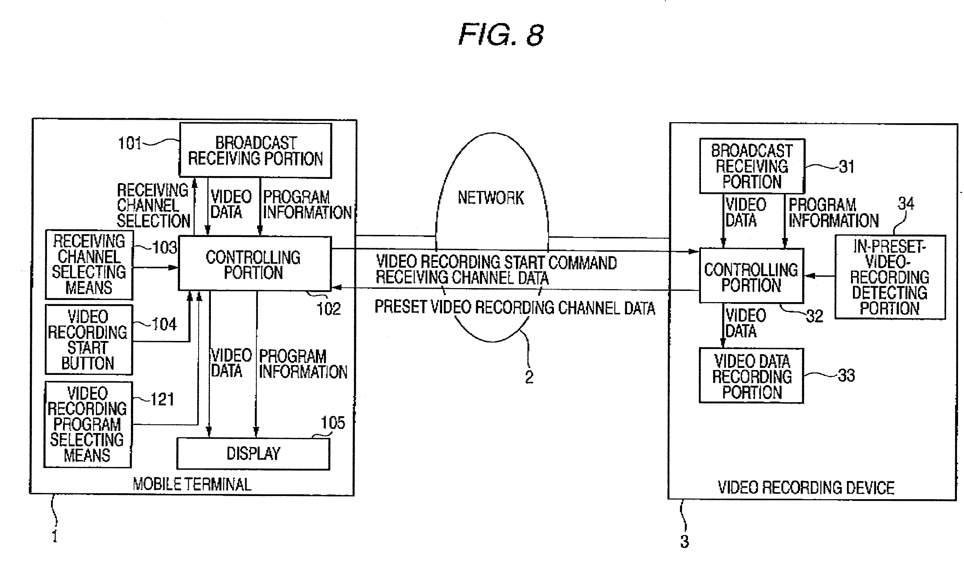

FIG.8 is a block diagram showing an example of concrete configurations (example where an arbitrating operation is carried out while a preset video recording is started at a time when a video recording start command is transmitted from a mobile terminal to a video recording device) of the video program recording/playing system of the present invention,

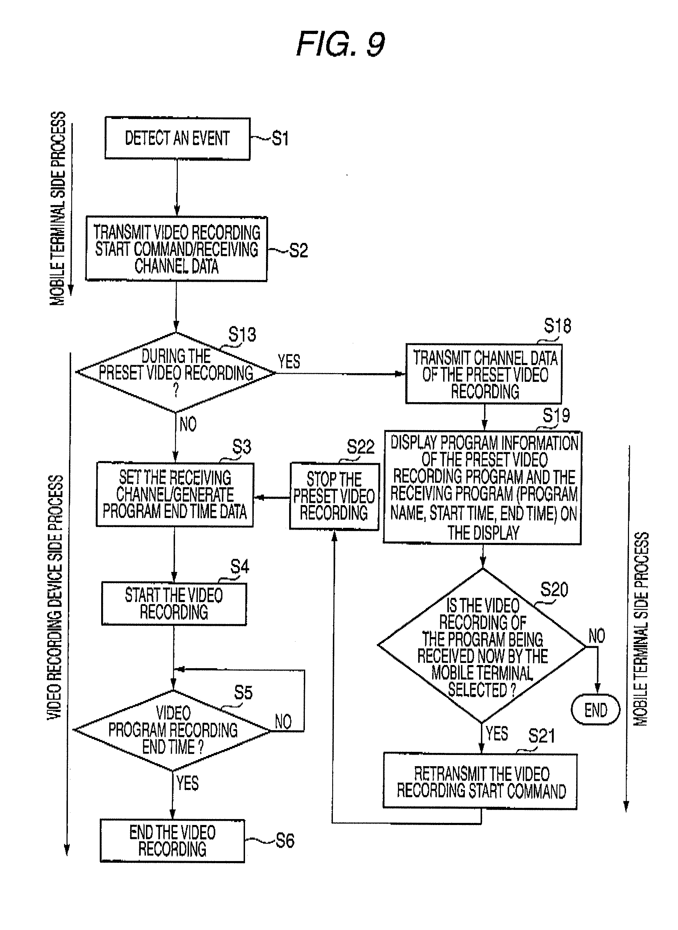

FIG. 9 is a flowchart showing principal operational procedures in the video program recording/playing system in FIG. 8.

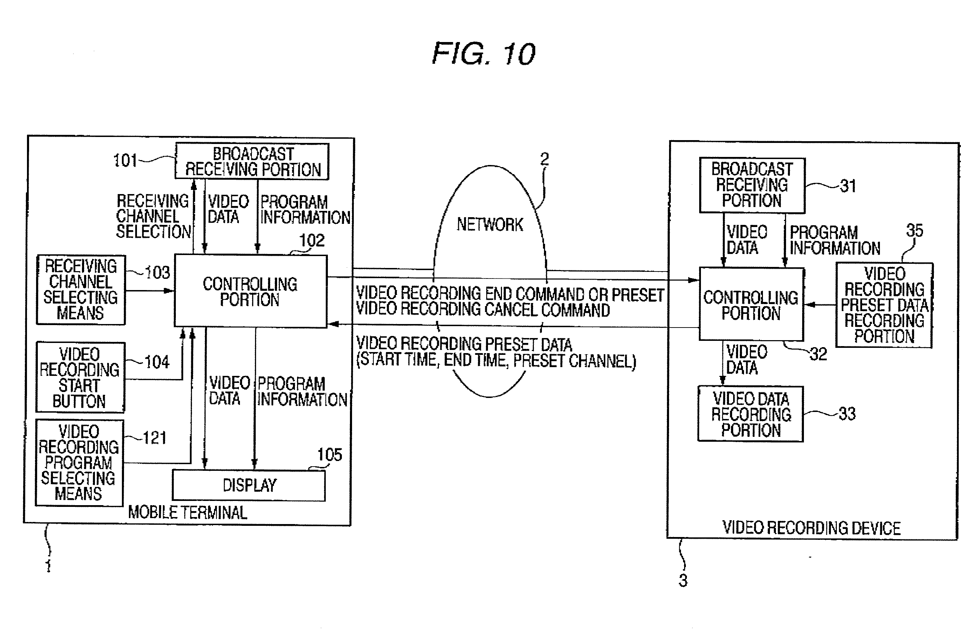

FIG.10 is a block diagram showing an example of concrete configurations (example where an arbitrating operation is carried out by canceling either of both video recordings in a situation that broadcasting time zones of the program requested by a video recording command and the program preset by a preset recording overlap with each other when a video recording start command is transmitted from a mobile terminal to a video recording device) of the video program recording/playing system of the present invention.

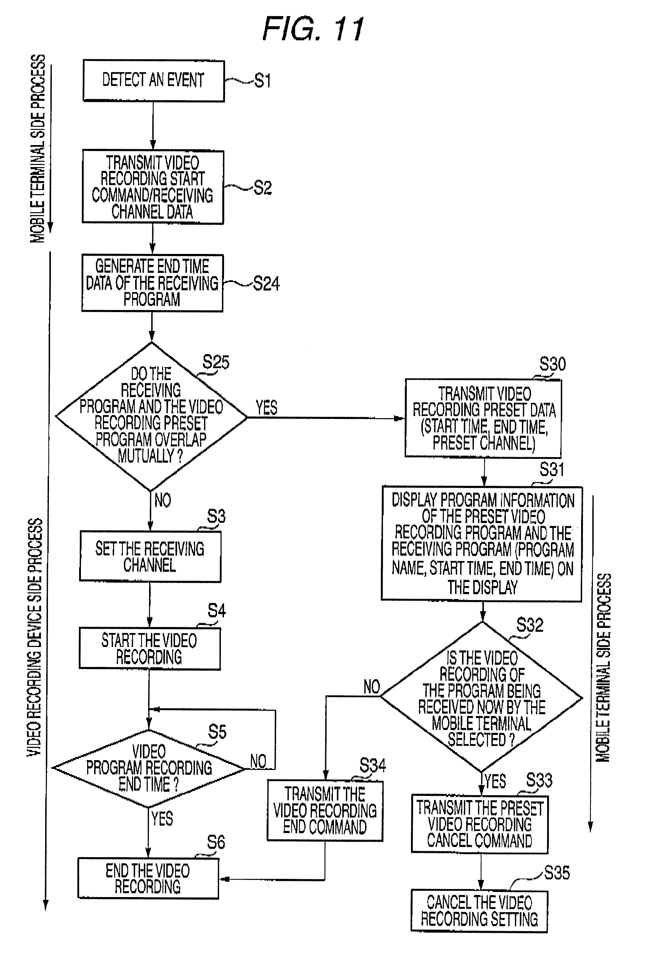

FIG.11 is a flowchart showing principal operational procedures in the video program recording/playing system in FIG.10.

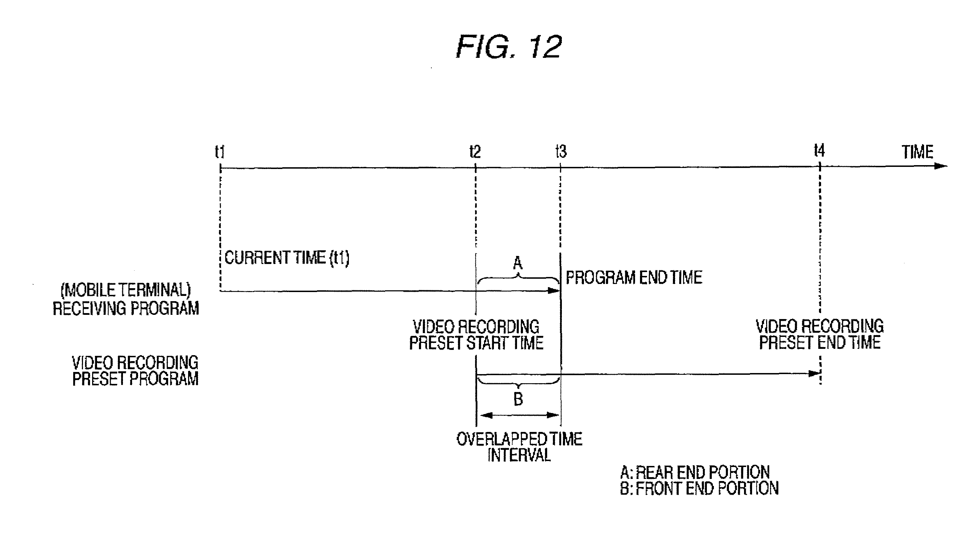

FIG. 12 is a block diagram showing an example of concrete configurations (example where an arbitrating operation is carried out by correcting either of video program recording times in a situation that broadcasting time zones of the program requested by a video recording start command and the program preset by a preset recording overlap with each other when a video recording start command is transmitted from a mobile terminal to a video recording device) of the video program recording/ playing system of the present invention.

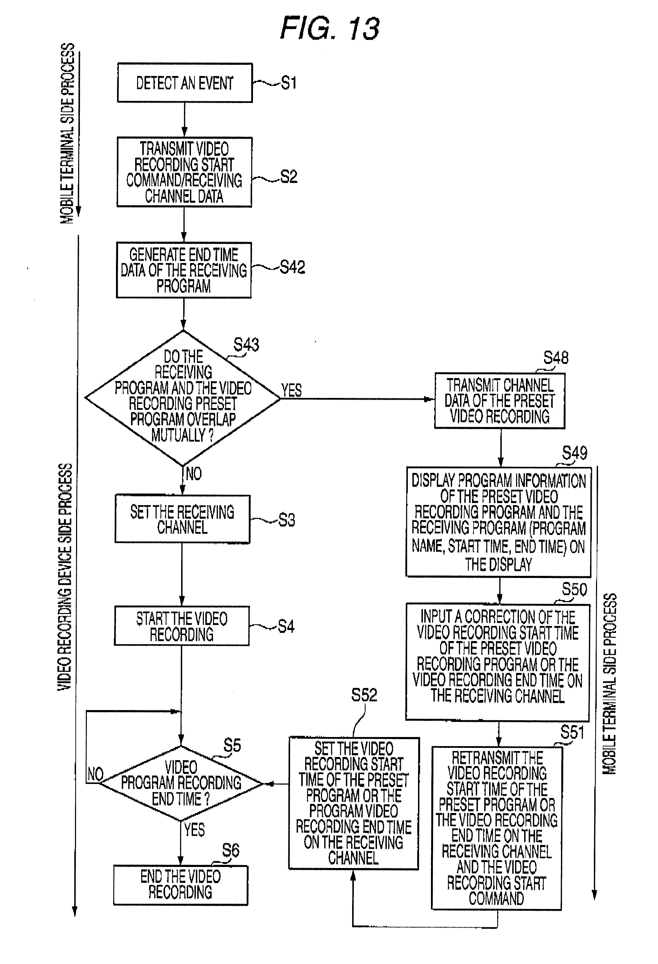

FIG. 13 is a flowchart showing principal procedures of executing processes shown in FIG. 12.

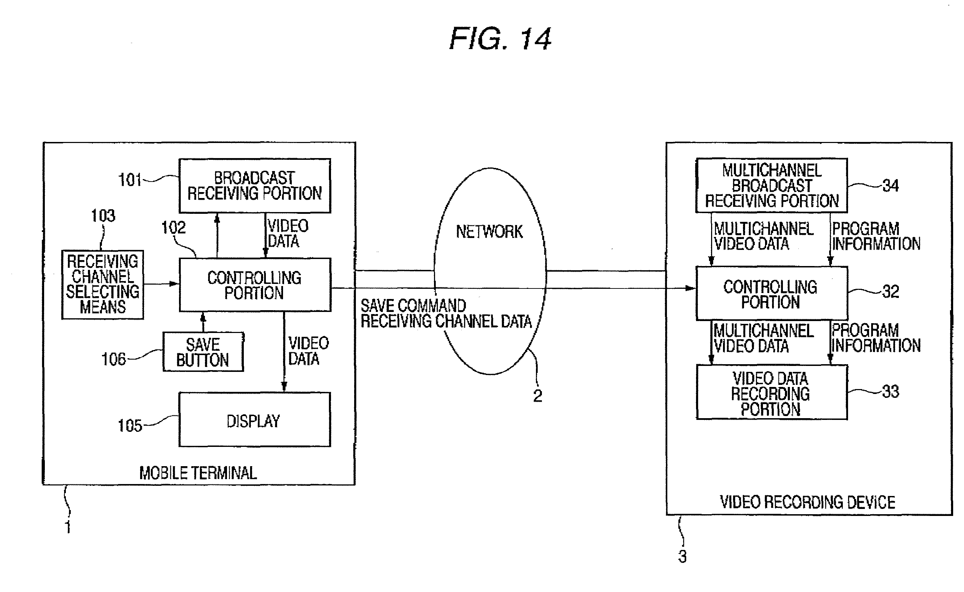

FIG. 14 is a block diagram showing an example of concrete configurations (example where a save command is transmitted from a mobile terminal to a video recording device having a function as a video server to inhibit the erasing of desired program data) of the video program recording/playing system of the present invention:

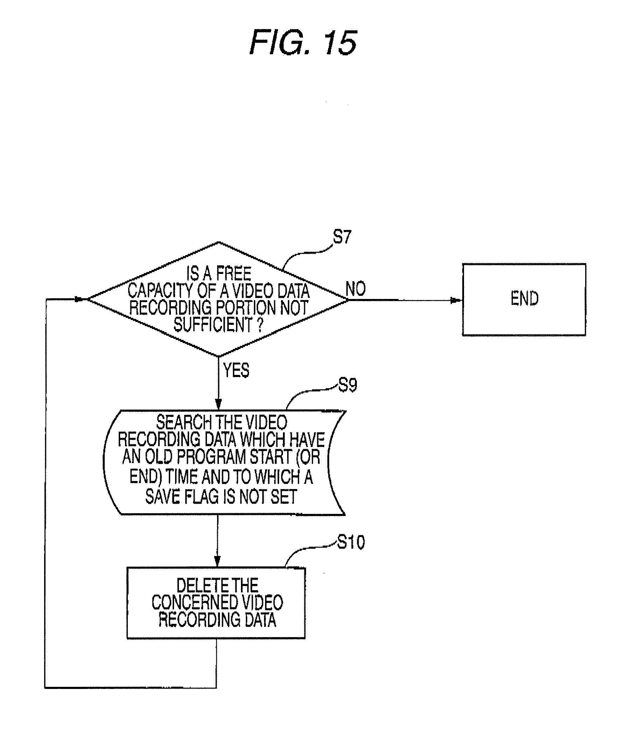

FIG.15 is a flowchart showing an erasing operation of recorded program data in the video recording device in the video program recording/playing system in FIG.14.

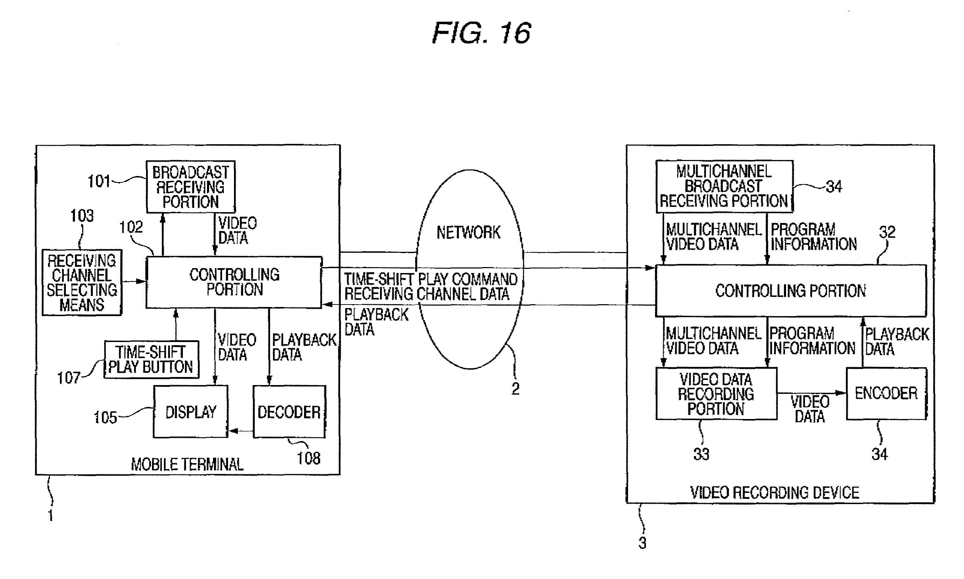

FIG.16 is a block diagram showing an example of concrete configurations (example where a time-shift play command is transmitted from a mobile terminal to a video recording device having a function as a video server to executing a time-shift playback) of the video program recording/playing system of the present invention.

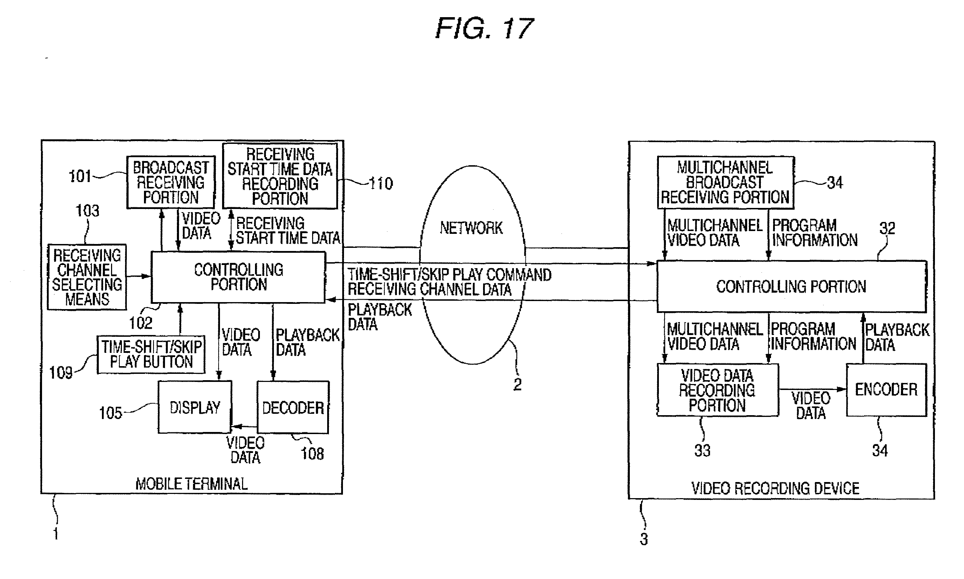

FIG.17 is a block diagram showing an example of concrete configurations (example where a time-shift/skip play command is transmitted from a mobile terminal to a video recording device having a function as a video server to executing a time-shift playback) of the video program recording/playing system of the present invention.

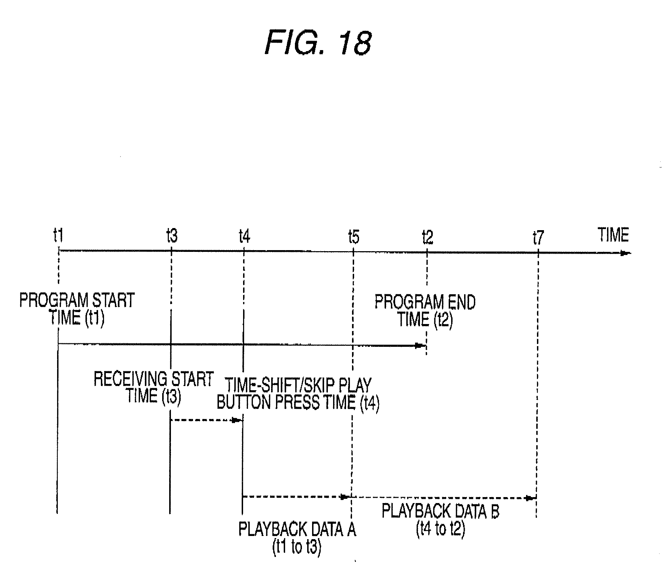

FIG. 18 is a view explaining contents of a time-shift/skip playback in the video program recording/playing system in FIG.17.

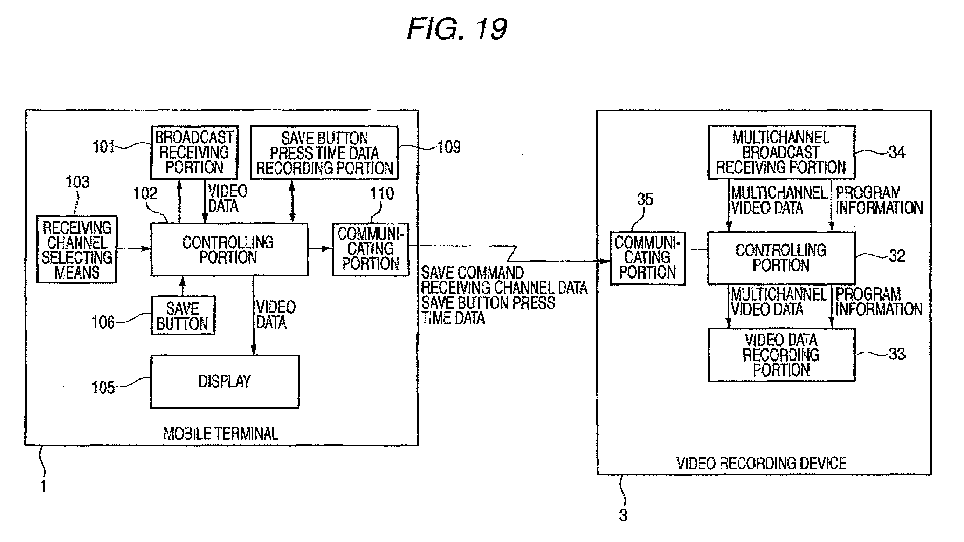

FIG.19 is a block diagram showing an example of concrete configurations (example where a save command is transmitted from a mobile terminal to a video recording device having a function as a video server by near field communication) of the video program recording/playing system of the present invention.

### <Description of Reference Numerals>

1 mobile terminal
2 communication network
3 video recording device
31 broadcast receiving portion
32 controlling portion
33 video data recording portion
101 broadcast receiving portion
102 controlling portion
103 receiving channel selecting means
104 video recording start button
105 display

### <Best Mode for Carrying Out the Invention>

Next, embodiments of the present invention will be explained with reference to the drawings hereinafter.

A video program recording/playing system of the present invention is established by connecting a video recording device that can receive and record the digital broadcasting in which the EPG data are multiplexed into video and audio information and a mobile terminal that that can receive the digital broadcasting in a one-way or two-way communication mode.

Then, examples of the video program recording/playing system built up such that, while the user is viewing the television broadcasting by the mobile terminal, such user can video-record the continuation of a program that the user is viewing on the video recording device by remotely controlling the video recording device from the mobile terminal will be explained with reference to first to fifth embodiments hereinafter.

Prior to the explanation of concrete configurations of the video program recording/playing system of the present invention having the above functions, an outline of basic processes in the present system will be explained hereunder.

FIG. 1 is a flowchart showing procedures of the basic process in this video program recording/playing system. Steps S1, S2 are processes on the mobile terminal side, and steps S3 to S6 are processes on the video recording device side,

In step S1 in FIG.1, the mobile terminal detects a predetermined event. A predetermined event is a pressing of a video recording start button done by a user of the mobile terminal, for example.

Further, as a predetermined event, there may be any event not depending upon the device operation of the user. That is, reduction in a receiving level at the mobile terminal, reduction in a remaining battery life, call arrival, mail arrival, talking start, and the like may constitute an event. These events act as interrupting causes of the viewing of the program of the digital broadcasting, on the mobile terminal. Therefore, the mobile terminal automatically detects occurrence of these events and then causes the video recording device to video- record the continuation of the program.

In step S2, the mobile terminal transmits a video recording start command and receiving channel data. In the prior art set forth in Patent Literature 1, the mobile terminal side must specify the program on the receiving channel, get start and end time information of the video recording, and send these information to the video recording device. Therefore, an amount of information is increased and a burden of the mobile terminal is increased.

In contrast, in the video program recording/playing system of the present invention, the EPG multiplexed into a radio wave of the digital broadcasting can be utilized, and respective information of channel information, program title, program start time, and program end time are contained in the EPG. Therefore, in the system of the present invention, when the sender side sends only the channel information, the receiver side can specify the program and know the start and end time by itself. As a result, an amount of information to be transmitted can be reduced and a burden on the side that transmits the information can be lessened. In particular, such advantages are achieved that, because a burden on the mobile terminal can be lessened, a battery life can be prolonged and a reduction in size and weight of the mobile terminal can be promoted.

In step S3 in FIG.1, the video recording device, when received the video recording start command and the receiving channel data from the mobile terminal, specifies the program by utilizing the EPG, sets the receiving channel, and gets the data indicating the program end time and sets video recording end time based on this program end time.

In step S4, the video recording device carries out a video recording. In step S5, the video recording device decides whether or not a time arrives at a program end time. If a time reached the program end time, the video recording device ends the video recording in step S6.

Even though the user of the mobile terminal cannot continue a viewing of the program for any reason, such user can execute a series of above processes. As a result, the user can play and view the continuation of the program by the video recording device after such user goes user's own home.

Examples applied to execute processes in compliance with a basic flow in FIG.1 (and examples applied to execute processes developed from the basic processes) will be explained with reference to a first embodiment to a fifth embodiment hereunder.

### (First Embodiment)

FIG. 2 is a block diagram showing an example of concrete configurations of the video program recording/playing system of the present invention,

A mobile terminal 1 and a video recording device 3 are connected mutually via a communication network 2.

As illustrated, the mobile terminal 1 includes a broadcast receiving portion 101 for receiving the digital broadcasting (containing the terrestrial digital broadcasting), a controlling portion 102 for controlling an operation of the overall equipment generally, a receiving channel selecting means 103, a video recording start button 104, and a display (a liquid crystal display device, or the like) 105.

Further, the video recording device 3 includes a broadcast receiving portion 31 for receiving the digital broadcasting (containing the terrestrial digital broadcasting), a controlling portion 32 for controlling an operation of the overall equipment generally, and a video data recording portion 33 for recording program data.

The mobile terminal 1 and the video recording device 3 in FIG. 2 execute operations corresponding to steps S1 to S6 shown in FIG. 1.

In other words, a user of the mobile terminal 1 selects a desired channel by operation the receiving channel selecting means 103, displays a desired program on the display 105, and views the program. Then, assume that the user cannot but stop the viewing for some reason while such user is viewing the television broadcasting by using the mobile terminal 1. Such situation is caused, for example, when the user of the mobile terminal enters into the building in which such user is required to turn off the cellular phone.

At this time, the user of the mobile terminal 1 presses the video recording start button 104, and then the controlling portion 102 of the mobile terminal 1 detects this pressing. This corresponds to the detection of the event (step S1) in FIG.1.

Then, the controlling portion 102 transmits the video recording start command and the receiving channel data (data indicating the channel via which the mobile terminal 1 is receiving the program) to the video recording device via the communication network 2 (step S2 in FIG.1).

The controlling portion 32 of the video recording device 3 specifies the program based on the EPG by referring to the receiving channel received now, gets information of the program (start and) end time, and sets the receiving channel (step S3 in FIG. 1). Then, the controlling portion 32 starts the video recording (step S4 in FIG.1).

The program data are recorded on the video data recording portion 33. Then, when a time arrives at the program end time (step S5 in FIG. 1), the video recording is ended (step S6 in FIG. 1).

In this manner, in the video program recording/playing system in FIG. 2, an amount of information to be transmitted can be reduced by utilizing the EPG data. In particular, such advantages are achieved that, because the burden on the mobile terminal can be lessened, the battery life can be prolonged and the reduction in size and weight of the mobile terminal can be promoted.

Further, even when the user of the mobile terminal 1 cannot continue the viewing of the program for any reason while such user is watching the digital broadcasting on the mobile terminal 1, such user can record the continuation of the program on the video recording device 3 in user's own home by pressing the video recording start button 104. As a result, the user of the mobile terminal 1 can play and view the continuation by using the video recording device 3 after such user goes user's own home.

Further, the user of the mobile terminal 1, when uses the video program recording/playing system of the present invention, can find effectively a desired program of the digital broadcasting and record it without fail. In other words, it is considerably difficult for the user to search the program that the user wishes to view actually from a large number of programs. In this regard, the user of the mobile terminal 1 may find a brief moment of time to view the program on the mobile terminal 1. Then, only when the user feels that that program meets user's own taste, such user may video-record the continuation of the program by remote control. As a result, the user of the mobile terminal 1 can video-record effectively only the program that the user wishes to view truly.

### (Second Embodiment)

In the foregoing embodiment, the user of the mobile terminal 1 transmits the video recording start command by operating the video recording start button 104. In the present embodiment, when any one of reduction in a receiving level, reduction in a remaining battery life, call arrival, mail arrival, talking start, and the like is detected while the user is viewing the digital broadcasting on the mobile terminal 1, this mobile terminal 1 transmits automatically the video recording start command, etc, to cause the video recording device 3 to video-record the continuation of the program. Since the above events act as the cause to interrupt the viewing of the TV program on the mobile terminal 1, the user executes a remote control of the video recording device 3 from the mobile terminal 1 such that the user can look and listen continuously the program after the interruption.

FIG.3 is a block diagram showing a configuration of another embodiment of the video program recording/playing system of the present invention. In FIG. 3, the same reference symbols are affixed to the portions common to those in FIG.2. This regard is true of following Drawings.

A basic configuration in FIG.3 is similar to that in FIG.2. However, in the mobile terminal 1 in. FIG.3, a receiving level deciding portion 11 is added in place of the video recording start button 104. The configuration of the video recording device 3 is not changed.

The receiving level deciding portion 11 of the mobile terminal 1 in FIG.3 always monitors a received electric field strength of the broadcast receiving portion 101. When a received electric field strength is lowered below a predetermined level while the user is viewing the TV program, the receiving level deciding portion 11 detects the reduction in field strength (corresponding to step S1 in FIG.1) and notifies the controlling portion 102 of such reduction.

The controlling portion 102, when received this notification, transmits the video recording start command and the receiving channel data to the video recording device 3 (step S2 in FIG. 1). Then, the video recording device 3 executes steps S3 to S6 in FIG. 1. This regard is similar to the first embodiment.

In the mobile terminal 1 in FIG. 4, a call arrival detecting portion 112 is provided instead of the receiving level deciding portion 11, When the call arrival detecting portion 112 detects a call arrival white the user is viewing the TV broadcasting, it notifies the controlling portion 102 of the call arrival. Subsequent operations are similar to those in the case in FIG. 3.

In the mobile terminal 1 in FIG. 5, a mail arrival detecting portion 113 is provided instead of the call arrival detecting portion 112 in FIG. 4, When the mail arrival detecting portion 113 detects a mail arrival while the user is viewing the TV broadcasting, it notifies the controlling portion 102 of the mail arrival. Subsequent operations are similar to those in the case in FIG.3.

In the mobile terminal 1 in FIG.6, a remaining battery life detecting portion 114 is provided instead of the mail arrival detecting portion 113 in FIG. 5. When the remaining battery life detecting portion 114 detects a reduction in a remaining battery life while the user is viewing the TV broadcasting, it notifies the controlling portion 102 of the reduction, Subsequent operations are similar to those in the case in FIG.3.

In the mobile terminal 1 in FIG. 7, a talking detecting portion 115 is provided instead of the remaining battery life detecting portion 114 in FIG.6. When the talking detecting portion 115 detects a talking start while the user is viewing the TV broadcasting, it notifies the controlling portion 102 of the talking start. Subsequent operations are similar to those in the case in FIG.3.

In this manner, according to the present embodiment, when an event acting as the cause to interrupt the viewing of the program of the digital broadcasting occurs, the mobile terminal 1 detects the occurrence and causes the video recording device 3 automatically to video-record the continuation of the program by remote control. Therefore, although the user of the mobile terminal 1 does not operate the device at all, such user can look and listen the continuation of the program the viewing of which was interrupted without fail after such user goes .user's own home. As a result, user's convenience can be improved,

### (Third Embodiment)

Sometimes such a situation is brought about that, only when the video recording start command is transmitted one-sidedly from the mobile terminal to the video recording device, this video recording competes with the video recording setting preset in the video recording device, In such case, in the present embodiment, the video recording device transmits the information to the mobile terminal to cause the user to execute mediation for himself or herself such that the user can video-record the program that the user desires truly without fail.

A configuration of the mobile terminal 1 in the video program recording/playing system in FIG.8 is given by adding a video recording program selecting means 121 to the configuration in FIG.2. Further, a configuration of the video recording device 3 is given by adding an in-preset-video- recording detecting portion 34 to the configuration in FIG. 2.

When the video recording device 3 is carrying out the preset video recording being set in advance at a point of time when the video recording device 3 receives the video recording start command from the mobile terminal 1, the in-preset-video- recording detecting portion 34 of the video recording device 3 detect such situation and notifies the controlling portion 32 of the competition. The controlling portion 32 transmits channel information of the program being video-recorded now (preset video recording channel data) from the video recording device 3 to the mobile terminal 1.

The mobile terminal 1 receives the channel information of the program being video-recorded now (preset video recording channel data), specifies the program during the preset video recording by utilizing the EPG, and gets the program information. Then, the mobile terminal 1 offers the program information to the user by displaying a predetermined screen on the display 105, and causes the user to decide which program should be selected.

Then, when the user decides that the video recording of the program that user is viewing on the mobile terminal 1 should be selected, by using the video recording program selecting means 121, the mobile terminal 1 retransmits the video recording start command to the video recording device 3. Accordingly, the video recording device 3 executes the video recording of the program instructed by the video recording start command. As a result, the user can video-record the program that the user desires truly without fail.

FIG.9 is a flowchart showing operational procedures in the video program recording/playing system in FIG 8. The basic procedures shown in FIG.9 are steps S1 to S6 in FIG.1, but step S13 and steps S18 to S20 are added to the flowchart in FIG.9.

Step S13 is a decision step that the in-preset-video- recording detecting portion 34 of the video recording device 3 executes to decide whether or not the preset video recording is being executed now.

Further, in step S18, the controlling portion 32 of the video recording device 3 transmits the channel data of the preset video recording to the mobile terminal 1.

Steps S19 to S21 correspond to the processes in the mobile terminal 1. In step S19, the mobile terminal 1 displays program information of the preset video recording program and the receiving program (program name, program start time, program end time) on the display 105. In step S20, the user makes a decision to decide whether or not the video recording of the program being received now by the mobile terminal 1 should be selected, If Yes, the mobile terminal 1 retransmits the video recording start command to the video recording device 3 (step S21). When the video recording device 3 receives the video recording start command transmitted again, the controlling portion 32 stops the preset video recording (step S22).

### (Fourth Embodiment)

The video recording setting is set in the video recording device 3 at a point of time when the video recording device 3 receives the video recording start command from the mobile terminal 1. When a time zone of the video recording setting overlaps with a broadcast time zone of the program instructed by the video recording start command, the video recording device 3 cannot understand which program should be video-recorded preferentially. Therefore, in such case, in the present embodiment, the video recording device 3 offers necessary information to the user to cause the user himself or herself to decide which one of the video recordings of the programs should be selected.

A configuration of the mobile terminal 1 in FIG.10 is similar to the configuration of the mobile terminal 1 shown in FIG.8. In the video recording device 3 in FIG.10, a video recording preset data recording portion 35 is provided in place of the in-preset-video-recording detecting portion 34 in FIG.8.

When the controlling portion 32 of the video recording device 3 receives the video recording start command from the mobile, terminal 1, such controlling portion 32 refers to the video recording preset data recording portion 35. Then, the controlling portion 32 decides whether or not a time zone of the video recording setting being set in the video recording device 3 overlaps with a broadcast time zone of the program instructed by the video recording start command. When both time zones overlaps with each other, the controlling portion 32 transmits the channel information of the program for the preset video recording (video recording preset data: data of the start time, the end time, the preset channel) to the mobile terminal 1.

The mobile terminal 1 specifies the program by utilizing the EPG, and then gets the program information. Then, the mobile terminal 1 offers necessary information to the user by displaying a predetermined indication on the display 105, and then causes the user to decide which program should be selected preferentially,

When the user decides that the video recording of the program being viewed now by the mobile terminal 1 should take precedence, the mobile terminal 1 transmits a preset video recording cancel command, In contrast, when the user decides that the preset video recording should take precedence, the mobile terminal 1 transmits a video recording end command to invalidate the previously transmitted video recording start command and then end the video recording.

Therefore, even when the video recording start command and the preset video recording compete with each other, the adequate video recording process that reflects user's intention can be carried out, As a result, the user can video-record the program that the user desires truly without fail.

FIG. 11 is a flowchart, showing operational procedures in the video program recording/playing system in FIG. 10. The basic procedures shown in FIG. 9 are steps S1 to S6 in FIG. 1, but step S24, step S25, and steps S30 to S35 are added to the flowchart in FIG. 11.

In step S24, the video recording device 3 generates end time data of the receiving program. In step S25, the video recording device 3 decides whether or not both time zones of the receiving program and the video recording preset program overlap with each other. If there is no overlapping, a series of processes are executed along with a basic flow shown in FIG.1. In contrast, if an overlapping exists, first the video recording device 3 transmits video recording preset data (start time, end time, preset channel) (step S30)

The mobile terminal 1 displays program information of the preset video recording program and the receiving program (program name, start time, end time) on the display 105, and calls upon the user to select one of the programs (step S31), Then, the mobile terminal 1 decides whether or not the user selects the video recording of the program being received now by the mobile terminal (step S32). If Yes, the mobile terminal 1 transmits the preset video recording cancel command (step S33). Accordingly, the video recording setting in the video recording device 3 is canceled (step S35).

In contrast, in step S32, if the user does not make such selection, the mobile terminal 1 transmits the video recording end command (step S34). Accordingly, the video recording in the video recording device 3 is ended (step S6).

Since such processes are carried out, the user can video-record the program that the user desires truly without fail.

### (Fifth Embodiment)

In the present embodiment, when a broadcasting time zone of the program requested by the video recording start command and a time zone of the program of the preset recording overlap with each other, a chance to adjust the video recording start or end time can be given to the user to record both programs while solving flexibly the overlapping of time zones.

FIG.12 is a view showing an example of the case where a broadcasting time zone of the program requested by the video recording start command and a time zone of the preset video recording overlap with each other.

In FIG. 12, an abscissa is a time axis. A time t1 is a current time, a time t2 is a video recording preset start time, a time t3 is an end time of the program being received now by the mobile terminal 1, and a time t4 is a video recording preset end time.

In FIC.12, an time interval A is a rear end portion of the video recording time zone of the program being received now by the mobile terminal 1. Further, a time interval B is a front end portion of the video recording time zone of the program of the video recording setting. As apparent from FIG. 12, the interval A and the interval B belong to the same time zone and overlap mutually. That is, the video recording of the program instructed by the video recording start command and the video recording of the program of the preset video recording compete with each other in this time period. Therefore, a chance to adjust the video recording start or end time can be given to the user to record both programs while solving flexibly the overlapping of time zones.

FIG.13 is a flowchart showing process procedures of solving the overlapping of time zones flexibly when the video recording of the program requested by the video recording start command and the video recording of the program of the preset recording compete with each other.

Basic procedures shown in FIG. 13 are steps S1 to S6, but step S42, step S43, and step S48 to S52 are added in the flowchart in FIG. 13.

In step S42, the video recording device 3 generates the end time data of the receiving program. In step S43, the video recording device 3 decides whether or not the time zones of the receiving program and the video recording preset program overlap with each other. If there is no overlapping, a series of processes are carried out along with a basic flow shown in FIG.1. In contrast, if an overlapping exists, first the video recording device 3 transmits the channel data of the preset video recording (step S48).

The mobile terminal 1 displays program information of the preset video recording program and the receiving program (program name, start time, end time) on the display 105, and calls upon the user to select one program (step S49).

The user selects either of the correction of the video recording start time of the preset video recording program and the correction of the video recording end time on the receiving channel, and inputs the corrected time (step S50). The mobile terminal 1 retransmits the corrected time information and the video recording start command to the video recording device 3 (step S51).

The video recording device 3 resets the video recording start time of the preset program or resets the video program recording end time on the receiving channel (step S52).

In this manner, in case the latter half portion of the program instructed by the video recording start command and the former half portion of the program of the video recording preset overlap partially with each other, either the process of ending the program requested by the video recording start command a little early or the process of starting the preset video recording a little later can be carried out by the device operation made by the user himself or herself, so that the user can adjust the overlapping of the time zone flexibly. Accordingly, the user can enjoy both programs later, and user's convenience can be improved remarkably.

### (Sixth Embodiment)

Out of the video recording devices that are compatible with the digital broadcasting, there are some recording devices that can accumulate program data of more than two programs or all programs out of the programs on a plurality of channels whose broadcasting time zones overlap mutually in a program recording portion (this type video recording device is called a "video server"). In such video recording device, the process of increasing a free capacity by erasing the accumulated video recording data automatically is executed in a situation that a free space of the program recording portion is reduced. If the video recording device having a video server function capable of accumulating all programs being broadcasted in the same time period, for example, is utilized as the video recording device 3 constituting the video program recording/ playing system of the present invention, there is no need to transmit the video recording start command from the mobile terminal 1.

In this case, it may unexpectedly happen that data of the program, which is viewed now by the mobile terminal 1 and a viewing of which is interrupted in the middle, is erased by the erasing process to keep a capacity in the video recording device 3.

Therefore, in the present embodiment, the user executes save (inhibit of erase) of the recorded program data by executing remote control from the mobile terminal 1.

FIG.14 is a block diagram showing a configuration of the video program recording/playing system of the present invention, which executes the recorded program data saving process.

A configuration of the mobile terminal 1 shown in FIG. 14 is basically similar to that shown in FIG. 2. In FIG. 14, the video recording start button 104 in FIG.2 is replaced with a save button 106.

Further, a configuration of the video recording device 3 in FIG.14 is basically similar to that shown in FIG. 2. In the video recording device 3 in FIG.14, a multichannel broadcast receiving portion 36 is employed. Accordingly, the video recording device 3 has a video server function capable of accumulating a plurality of programs (here, all programs) broadcasted at the same time zone.

Further, when the controlling portion 32 of the video recording device 3 receives the receiving channel information and a program save command from the mobile terminal 1, it specifies the program and decides a start time and an end time of the program. Further, the controlling portion 32 specifies a time at which such portion received the program save command by referring to a time stamp, or the like.

Then, the controlling portion 32 inhibits the erasing of the program data of the specified program subsequent to a point of time when the video recording device 3 received the program save command. This inhibition of the erasing of the data can be executed by attaching a save flag to the recorded program data, for example.

FIG.15 is a flowchart showing procedures when, because of lack of a free capacity of the recording portion, the program data recorded in the past should be erased from the video recording device 3 having a function as a video server in FIG.14.

In FIG. 15, the video recording device 3 decides whether or not the free capacity of the video data recording portion 33 is not sufficient (step S7). If Yes, the process goes to step S9. In step S9, the controlling portion 32 searches the video recording data, which have an old program start time (or program end time) and to which a save flag is not set. Then, the searched program data are deleted from the video data recording portion 33 (step S10).

Such program saving process (deletion inhibiting process) can be executed by remote control from the mobile terminal 1. Therefore, the user can view and enjoy the program a viewing of which by the mobile terminal is interrupted without fail after the user goes user's own home in which the video recording device 3 is put. As a result, user's convenience can be improved remarkably.

### (Seventh Embodiment)

In the present embodiment, a program viewing function of the mobile terminal and a program playing function of the video recording device (having a video server function) are caused to cooperate with each other, and then the program data played by the video recording device are transmitted to the mobile terminal such that the user can view the program on the mobile terminal. In this case, the video recording device acts as the video server (video distributing device) that provides program information to the mobile terminal.

In other words, the user of the mobile terminal 1 viewed some television program from the middle but this user wishes to view this program from the beginning since the contents of this program is interesting to the user. In this case, the user can receive the playback data from the video recording device 3 by utilizing the time-shift playing function, and can view the program from the beginning (i.e., while going back to the past) on the mobile terminal 1. As a result, user's convenience can be improved remarkably.

FIG. 16 is a block diagram showing a configuration of the video program recording/playing system of the present invention, which executes the time-shift playback.

A configuration of the mobile terminal 1 shown in FIG. 16 is basically similar to that shown in FIG. 2. In FIG. 16, the video recording start button 104 in FIG. 2 is replaced with a time-shift play button 107. Further, a decoder 108 for decoding the program data being time-shift played and sent from the video recording device 3 and supplying the data to the display 105 is provided,

Further, a configuration of the video recording device 3 shown in FIG. 16 is basically similar to that shown in FIG. 2. In the video recording device 3 of FIG. 16, the multichannel broadcast receiving portion 36 is employed. Accordingly, the video recording device 3 has a video server function that can accumulate a plurality of programs (here, all programs) broadcasted in the same time period.

Further, in order to execute a time-shift playback, an encoder 37 for encoding the recorded program data accumulated in the video data recording portion 33 and supplying the data to the controlling portion 32 as the playback data is provided to the video recording device 3. As this encoder 37, the encoder based on MPEG4 or the encoder based on H.264 can be employed.

When the user of the mobile terminal 1 viewed some television program from the middle but this user wishes to view the program from the beginning since the contents of the program is interesting to the user, such user presses the time-shift play button 107. Then, the controlling portion 102 of the mobile terminal 1 transmits a time-shift play command as well as the receiving channel information to the video recording device 3.

The controlling portion 32 of the video recording device 3 refers to the receiving channel information sent from the mobile terminal, specifies the program based on the EPG, and gets information of the start time and the end time. Then, the controlling portion 32 searches the video data recording portion 33 based on these program information, and detects the concerned recorded data. Then, the controlling portion 32 transfers the recorded program data (from the start time to the end time) to the encoder 37 in sequence.

The encoder 37 encodes the program data in a predetermined format. The encoded program data are transmitted to the mobile terminal 1 via the controlling portion 32,

In the mobile terminal 1, the program data being time-shift played and transmitted from the video recording device 3 are decoded by the decoder 108, and then the image of the program is displayed on the display 105.

In this manner, according to the present embodiment, a higher function (a function as the video server by using the multichannel video recording) of the video recording device that is compatible with the digital broadcasting can be caused to cooperate with the one-segment broadcast viewing function of the mobile terminal 1. Therefore, the time-shift playback can be carried out and as a result the user can enjoy comfortably the digital broadcasting.

### (Eighth Embodiment)

In the present embodiment, like the seventh embodiment, the program viewing function of the mobile terminal and the program playing function of the video recording device (having the video server function) are caused to cooperate with each other, and then the program data being time-shift played by the video recording device are transmitted to the mobile terminal such that the user can view the program on the mobile terminal: As described above, the video recording device acts as the video server (video distributing device) that provides program information to the mobile terminal.

However, in the present embodiment, not the mere time- shift playback but the time-shift/skip playback is carried out. This time-shift/skip playback gives a playing system that the program that the user viewed from the middle is played from the beginning to go back the past such that the already-viewed interval is skipped (or fast-forward played) during this playback to avoid needless duplication, whereby the user can look and listen the program more effectively.

In other words, the user of the mobile terminal 1 viewed some program from the middle but this user wishes to view this program from the beginning since the contents of this program is interesting to the user. In this case, the user can receive the playback data from the video recording device 3 by utilizing the time-shift/skip playing function, and can view the program from the beginning (i.e., while going back to the past) on the mobile terminal 1 while skipping (fast-forward playing) the already-viewed portion of the program. Therefore, the user can view surely the favorite digital broadcasting program from the first to the end effectively without wastage, and as a result user's convenience can be improved remarkably,

FIG.17 is a block diagram showing a configuration of the video program recording/playing system of the present invention, which executes the time-shift playback.

A configuration of the mobile terminal 1 shown in FIG.17 is basically similar to that shown in FIG,16. In FIG 17, the time-shift play button 107 in FIG. 16 is replaced with a time- shift/skip play button 109. Further, a receiving start time data recording portion 110 is provided.

Further, a configuration of the video recording device 3 shown in FIG. 17 is basically similar to that shown in FIG. 16. That is, the multichannel broadcast receiving portion 36 is provided, Accordingly, the video recording device 3 has a video server function that can accumulate a plurality of programs (here, all programs) broadcasted in the same time period.

Further, in order to execute a time-shift/skip playback, the encoder 37 for encoding the recorded program data accumulated in the video data recording portion 33 and supplying the data to the controlling portion 32 as the playback data is provided to the video recording device 3. As this encoder 37, the encoder based on MPEG4 or the encoder based on H.264 can be employed.

When the user of the mobile terminal 1 viewed some television program from the middle and then was viewing the program for a while but this user wishes to view the program from the beginning and fast-forward an already-viewed interval of the program since the contents of the program is interesting to the user, such user presses the time-shift/skip play button 109. Then, the controlling portion 102 of the mobile terminal 1 transmits a time-shift/skip play command and the receiving start time information as well as the receiving channel information to the video recording device 3.

The controlling portion 32 of the video recording device 3 refers to the receiving channel information sent from the mobile terminal, specifies the program based on the EPG, and gets information of the start time and the end time. Then, the controlling portion 32 searches the video data recording portion 33 based on these program information, and detects the concerned recorded data.

Further, the controlling portion 32 specifies the receiving start time from the receiving start time information and specifies a point of time when the time-shift/skip play button 109 is pressed, based on time-stamp information, for example. Then, the controlling portion 32 specifies an interval from a point of time when the receiving of the program is started to a point of time when the time-shift/skip play button 109 is pressed, as the already-viewed interval. Then, the controlling portion 32 executes the time-shift/skip playback, and transfers the recorded program data (from the start time to the end time) to the encoder 37 in sequence.

The encoder 37 encodes the program data in a predetermined format. The encoded program data are transmitted to the mobile terminal 1 via the controlling portion 32.

In the mobile terminal 1, the program data being time-shift/skip played and transmitted from the video recording device 3 are decoded by the decoder 108; and then the image of the program is displayed-on the display 105.

FIG.18 is a view explaining a concrete example of the time- shift/skip playback.

In FIG.18, an abscissa is a time axis, and a time t1 to t2 is a time zone during which a desired program is being broadcasted. Further, a time t3 indicates a program receiving start time of the mobile terminal 1. Further, a time t4 indicates a point of time when the time-shift/skip play button 109 is pressed.

In the mobile time 1, the program data that was broadcasted in a time zone from a time t1 to a time t4 is played in an interval of a time t4 to a time t5. At this time, since an interval from a time t3 to a time t4 corresponds to the already-viewed interval, this interval is skipped (or fast-forward played).

Then, the program data that was broadcasted in a time zone from a time t4 to a time t2 is played normally in an interval of a time t5 to a time t7.

In this manner; the user can view the program, the playback data of which are provided from the video recording device 3, on the mobile terminal 1 from the beginning (i.e., while going back the past) by utilizing the time-shift/skip playing function while fast-forwarding the already-viewed portion of the program. Therefore, the user can view the favorite digital broadcasting program effectively surely from the first to the end to avoid needless duplication, and thus user's convenience can be improved remarkably.

According to the present embodiment, a higher function (a function as the video server by using the multichannel video recording) of the video recording device that is compatible with the digital broadcasting can be caused to cooperate with the one-segment broadcast viewing function of the mobile terminal 1. Therefore, the time-shift/skip playback can be carried out and thus the user can enjoy comfortably the digital broadcasting.

### (Ninth Embodiment)

In the present embodiment, direct information transfer can be carried out between the mobile terminal and the video recording device by utilizing near field communication such as infrared communication, or the like.

For example, such a situation may occur that the user of the mobile terminal 1 executes the process of saving (inhibiting an erasure) of the predetermined recorded program data after such user goes back user's own home where the video recording device 3 having a video server function is put. At this time, the device operation is more simple and convenient by transmitting directly a program save command (a command for inhibiting a deletion of program data) from the mobile terminal 1 to the video recording device 3 than by transmitting the program save command via the network 2.

Therefore, in the present embodiment, direct transmission of information can be realized by using near field communication. Accordingly, user's convenience can be improved further.

FIG.19 is a block diagram showing a configuration of the video program recording/playing system of the present invention, which makes it possible to carry out direct information transfer between the mobile terminal and the video recording device by utilizing near field communication such as infrared communication, or the like.

In the mobile terminal 1 constituting the video program recording/playing system in FIG. 19, like the mobile terminal shown in FIG. 14; the save button 106 is provided and a save button press time data recording-portion 111 is added. The configuration of the video recording device 3 is similar to that shown in FIG. 14.

First, the user of the mobile terminal 1 finds out that the program that the user viewed on trial is interesting. Then, when the user wishes to inhibit the erasure of the recorded program data in the video recording device 3, such user presses the save button 106. At this time, a time at which the save button 106 is pressed is recorded by the save button press time data recording portion 111.

Then, after the user of the mobile terminal 1 goes back to user's own home, such user transmits the save command, the receiving channel data, and save button press time data to the video recording device 3 via a near field communicating portion 112 by using the near field communication function that the mobile terminal 1 possesses.

The video recording device 3 received the save command, the receiving channel data, and the save button press time data; which are sent from the mobile terminal 1, at a communicating portion 38, Then, the controlling portion 32 specifies the program, and then searches the video recording portion 33 to detect the concerned program. Then, the controlling portion 32 sets a save flag to the program data subsequent to the save button press time to inhibit the erasure of the program data.

In this manner, by using the near field communication, the program saving (erasure inhibiting) process can be carried out.

### (Tenth Embodiment)

The mobile terminal of the present invention is the mobile terminal 1 that can receive the digital broadcasting, as the constituent element of the video program recording/playing system of the present invention. As explained in plural foregoing embodiments, the mobile terminal 1 includes the digital broadcast receiving portion 101, and the controlling portion 102 for taking an operation that transmits the receiving channel data and either of the video recording start command, the save command, the time-shift play command, and the time- shift/skip play command to the video recording device 3.

By using the mobile terminal 1 of the present invention, the close cooperation of the mobile terminal with the video recording device 3 can be attained. Thus, a wide variety of flexible video recordings and playbacks unlike the prior art can be implemented, and user's convenience can be improved remarkably. The user of the mobile terminal 1 can fully enjoy the one-segment broadcasting. As a result, such an environment can be provided easily that the user can enjoy more comfortably the digital television broadcasting (containing terrestrial digital broadcasting).

### (Eleventh Embodiment)

The video recording device of the present invention is the video recording device that can receive the digital broadcasting, as the constituent element of the video program recording/playing system of the present invention. As explained in foregoing embodiments, this video recording device includes the digital broadcast receiving portion (31, 36), the controlling portion 32 for specifying the program based on the receiving channel information and either of the video recording start command, the save command, the time-shift play command, and the time-shift/skip play command, all being sent from the mobile terminal 1, and executing at least one of the process of video-recording the specified program, the process of saving the video-recorded data, the process of playing the program, and the process of transmitting the playback program data to the mobile terminal device, and the video data recording portion 33 for recording the program data received by the digital broadcast receiving portion (31, 36).

By using the video recording device 3 of the present invention, the cooperation with the mobile terminal 1 that is able to look and listen the one-segment broadcating can be attained. It is difficult for the mobile terminal, of which a reduction in size and weight is required, to realize a high-definition video recording or a long-time video recording of the television broadcasting. However, by using the video recording device 3 of the present invention, the weak points of the mobile terminal can be compensated for. In addition, a wide variety of flexible video recordings and playbacks unlike the prior art can be implemented by providing the close cooperation with the mobile terminal, and accordingly user's convenience can be improved remarkably, As a result, such an environment can be provided easily that the user can enjoy more comfortably the digital television broadcasting (containing terrestrial digital broadcasting).

As explained above, according to the video program recording/playing system of the present invention, an amount of information to be transmitted can be reduced by utilizing EPG data, particularly a burden of the mobile terminal can be lessened. Therefore, an effect of prolonging a battery life and an effect of promoting a reducing in size and weight of the mobile terminal can be achieved.

Further, the video recording device that can deal with the digital broadcasting has various higher functions than those of the analog broadcasting-compatible device in the prior art. Therefore, a wide variety of flexible video recordings and playbacks unlike the prior art can be implemented by causing the video recording device to cooperate closely with the mobile terminal, and accordingly user's convenience can be improved remarkably.

Further, the close cooperation with the video recording device can be provided by the mobile terminal of the present invention. Therefore, a wide variety of flexible video recordings and playbacks unlike the prior art can be implemented, and thus user's convenience can be improved remarkably. Further, the user of the mobile terminal can enjoy fully the one-segment broadcasting.

Further, the cooperation with the mobile terminal that can look and listen the one-segment broadcasting can be realized by using the video recording device of the present invention. In the mobile terminal of which a reduction in size and weight is severely required, it is difficult to realize a high-definition video recording or a long-time video recording of the television broadcasting. However, by using the video recording device of the present invention, the weak points of the mobile terminal can be compensated for. In addition, a wide variety of flexible video recordings and playbacks unlike the prior art can be implemented by providing the close cooperation with the mobile terminal, and accordingly user's convenience can be improved remarkably.

According to the present invention, such an environment can be set up easily that the user can enjoy the digital television broadcasting (containing terrestrial digital broadcasting) more comfortably.

The present invention is explained in detail with reference to the particular embodiments. But it is apparent for those skilled in the art that various variations and modifications can be applied without departing from a spirit and a scope pf the present invention,

This application is based upon Japanese Patent Application (Patent Application No.2005-332943) filed on November 17, 2005; the contents of which are incorporated herein by reference.

### <Industrial Applicability>

The present invention possesses such an advantage that such an environment can be created easily that video recording and playback can be carried out flexibly in a variety of ways unlike the prior art by causing the mobile terminal and the video recording device to cooperate closely with each other and a user can enjoy more comfortably digital television broadcastings (containing terrestrial digital broadcasting), and thus is useful to the video recording device that can receive and record the digital broadcasting, the mobile terminal that can receive the digital broadcasting, and the video program recording/playing system that is built up by causing them to cooperate closely with each other.

## Claims

1. A video program recording/playing system constructed such that a video recording device that can receive and record a digital broadcasting in which electronic program guide (EPG) data are multiplexed into video and audio information and a mobile terminal that that can receive the digital broadcasting are connected in a one-way or two-way communication mode,
wherein the mobile terminal transmits information containing receiving channel information used to operate the video recording device to the video recording device, and
the video recording device refers the receiving channel sent from the mobile terminal, specifies the program based on the electronic program guide (EPG) data, and executes at least one of a process of video-recording the specified program, a process of saving recorded data, a process of playing the program, and a process of transmitting the played program data to the mobile terminal device.

2. The video program recording/playing system according to claim 1, wherein, when a user of the mobile terminal executes a device operation to instruct the video recording device to start the video recording, the mobile terminal transmits the receiving channel information and a video recording start command to the video recording device, and
the video recording device refers the receiving channel information sent from the mobile terminal, specifies the program based on the electronic program guide (EPG) data, decides a broadcast end time of the specified program, and executes automatically the video recording of the program and an end of the program.

3. The video program recording/playing system according to claim 1, wherein, when the mobile terminal detects occurrence of a predetermined event, the mobile terminal transmits the receiving channel information and a video recording start command to the video recording device, and
the video recording device refers the receiving channel information sent from the mobile terminal, specifies the program based on the electronic program guide (EPG) data, decides a broadcast end time of the specified program, and executes automatically the video recording of the program and an end of the program.

4. The video program recording/playing system according to claim 3, wherein the predetermined event is any one of a reduction in a receiving level, a call arrival, a mail arrival, and a talking start.

5. The video program recording/playing system according to any one of claim 2 to claim 4, wherein, when the video recording device is executing a preset video recording at a point of time the video recording device received the video recording start command from the mobile terminal, the video recording device transmits channel information in a preset video recording to the mobile terminal,
the mobile terminal refers the transmitted channel information in the preset video recording, acquires program information based on the electronic program guide (EPG) data, and offers the acquired program information to the user, and then retransmits the video recording start command to the video recording device when the user decides that the video recording start command being sent previously takes precedence as a result of the offer, and
the video recording device, when received a retransmission of the video recording start command, stops the preset video recording, and starts a video program recording in compliance with the video recording start command sent from the mobile terminal.

6. The video program recording/playing system according to any one of claim 2 to claim 4, wherein, when the video recording device receives the video recording start command from the mobile terminal and also a broadcast time zone of the program instructed by the video recording start command overlaps with a time zone of the preset video recording setting, the video recording device transmits the channel information of the program requested by the preset video recording setting to the mobile terminal,
the mobile terminal refers the transmitted channel information of the program requested by the preset video recording setting, acquires program information based on the electronic program guide (EPG) data, and offers the acquired program information to the user, and then transmits the video recording setting cancel command to the video recording device when the user decides that the video recording start command being sent previously takes precedence as a result of the offer or transmits the video recording end command to the video recording device when the user decides that the preset video recording setting takes precedence, and
the video recording device cancels the preset video recording setting and starts the video recording of the program in compliance with the video recording start command from the mobile terminal when the video recording device received the video recording setting cancel command from the mobile terminal, and invalidates the video recording start command being received in advance and ends the video recording when the video recording device received the video recording end command from the mobile terminal.

7. The video program recording/playing system according to any one of claim 2 to claim 4, wherein, when the video recording device receives the video recording start command from the mobile terminal and also a rear end portion of a broadcast time zone of the program instructed by the video recording start command containing an end time point overlaps with a front end portion of a time zone of the preset video recording setting containing a start time point, the video recording device transmits the channel information of the program requested by the preset video recording setting to the mobile terminal,
the mobile terminal refers the transmitted channel information of the program requested by the preset video recording setting, acquires program information based on the electronic program guide (EPG) data, and offers the acquired program information to the user, and then retransmits the corrected video recording start time of the program requested by the preset video recording setting or the corrected video recording end time of the program instructed by the video recording start command when the user corrects the video recording start time of the program requested by the preset video recording setting as a result of the offer or when the user corrects the video recording end time of the program instructed by the video recording start command, and
when the video recording device received the corrected video recording start time of the program requested by the preset video recording setting or the corrected video recording end time of the program instructed by the video recording start command from the mobile terminal, the video recording device corrects correspondingly the video recording start time of the program requested by the preset video recording setting or the video recording end time of the program instructed by the video recording start command.

8. The video program recording/playing system according to claim 1, wherein the video recording device accumulates video recording data of more than two programs or all programs out of the programs whose broadcast time zones overlap with each other on a plurality of channels in a program recording portion, and has a function of executing a process of increasing a free capacity by erasing automatically accumulated video recording data when a free space of the program recording portion is reduced,
when the user of the mobile terminal performs a device operation to instruct the video recording device to save the program data, the mobile terminal transmits the receiving channel information and a program save command to the video recording device,
when the video recording device received the receiving channel information and the program save command sent from the mobile terminal, the video recording device refers the receiving channel information, specifies the program based on the electronic program guide (EPG) data, decides a broadcast start time and a broadcast end time of the specified program, and removes the video recording data of the program recorded in the program recording portion from a list of automatic erased objects..

9. The video program recording/playing system according to claim 1, wherein the video recording device accumulates video recording data of more than two programs or all programs out of the programs whose broadcast time zones overlap with each other on a plurality of channels in a program recording portion, and has a function of executing a process of increasing a free capacity by erasing automatically accumulated video recording data when a free space of the program recording portion is reduced,
when the user of the mobile terminal performs a device operation to instruct the video recording device to execute a time-shift playback, the mobile terminal transmits the receiving channel information and a time-shift play command to the video recording device,
when the video recording device received the receiving channel information and the time-shift play command sent from the mobile terminal, the video recording device refers the receiving channel information, specifies the program based on the electronic program guide (EPG) data, decides a broadcast start time and a broadcast end time of the specified program, plays the video recording data from a start point of time of the program recorded in the program recording portion, encodes playback data in a predetermined format, and transmits encoded data to the mobile terminal, and
the mobile terminal receives the playback data sent from the video recording device and encoded into a predetermined format, and decodes the encoded data such that the user of the mobile terminal is able to view the program.

10. The video program recording/playing system according to claim 1, wherein the video recording device accumulates video recording data of more than two programs or all programs out of the programs whose broadcast time zones, overlap with each other on a plurality of channels in a program recording portion, and has a function of executing a process of increasing a free capacity by erasing automatically accumulated video recording data when a free space of the program recording portion is reduced,
when the user of the mobile terminal performs a device operation to instruct the video recording device to execute a time-shift/skip playback of the program on the currently receiving channel, the mobile terminal transmits the receiving channel information, a time-shift/skip play command, and receiving start time information of the receiving channel to the video recording device,
when the video recording device received the receiving channel information and the time-shift/skip play command sent from the mobile terminal, the video recording device refers the receiving channel information, specifies the program based on the electronic program guide (EPG) data, decides a broadcast start time and a broadcast end time of the specified program, plays the video recording data from a start point of time of the program recorded in the program recording portion, performs a skip playback of the video recording data in a time period from the receiving start time indicated by the receiving start time information received from the mobile terminal to a time at which the time-shift/skip play command is received, encodes playback data in a predetermined format, and transmits encoded data to the mobile terminal, and
the mobile terminal receives the playback data sent from the video recording device and encoded into a predetermined format, and decodes the encoded data such that the user of the mobile terminal is able to view the program.

11. The video program recording/playing system according to any one of claim 1 to claim 10, wherein the video recording device and the mobile terminal are connected via a communication network.

12. The video program recording/playing system according to any one of claim 1 to claim 10, wherein the video recording device and the mobile terminal are connected directly by utilizing near field communication.

13. A mobile terminal capable of receiving digital broadcasting, as a constituent element of the video program recording/playing system set forth in any one of Claim 1 to Claim 12, comprising:
a digital broadcast receiving portion; and
a controlling portion for executing an operation to transmit the receiving channel information and either of the video recording start command, the save command, the time-shift play command, and the time-shift/skip play command to the video recording device.

14. A video recording device capable of receiving digital broadcasting, as a constituent element of the video program recording/playing system set forth in any one of Claim 1 to Claim 12, comprising:
a digital broadcast receiving portion;
a controlling portion for specifying the program based on the receiving channel information and either of the video recording start command, the save command, the time-shift play command, and the time-shift/skip play command sent from the mobile terminal, and executing at least one of a process of video-recording the specified program, a process of saving the video-recorded data, a process of playing the program, and a process of transmitting playback data of the program to the mobile terminal; and
a recording portion for recording the program data received by the digital broadcast receiving portion.

## Amended claims

### Amended claims under Art. 19.1 PCT

**1.** (Deleted)

**2.** (Deleted)

**3.** (Deleted)

**4.** (Deleted)

**5.** (Amended) A video program recording/playing system constructed such that a video recording device that can receive and record a digital broadcasting in which electronic program guide (EPG) data are multiplexed with video and audio information and a mobile terminal that that can receive the digital broadcasting are connected in a one-way or two-way communication mode,
wherein the mobile terminal transmits information containing receiving channel information used to operate the video recording device to the video recording device, and
the video recording device refers the receiving channel sent from the mobile terminal, specifies the program based on the electronic program guide (EPG) data, and executes at least one of a process of video-recording the specified program, a process of saving recorded data, a process of playing the program, and a process of transmitting the played program data to the mobile terminal device,
wherein, when the video recording device is executing a preset video recording at a point of time the video recording device received the video recording start command from the mobile terminal, the video recording device transmits channel information in a preset video recording to the mobile terminal,
the mobile terminal refers the transmitted channel information in the preset video recording, acquires program information based on the electronic program guide (EPG) data, and offers the acquired program information to the user, and then retransmits the video recording start command to the video recording device when the user decides that the video recording start command being sent previously takes precedence as a result of the offer, and
the video recording device, when received a retransmission of the video recording start command, stops the preset video recording, and starts a video program recording in compliance with the video recording start command sent from the mobile terminal.

**6.** (Amended) A video program recording/playing system constructed such that a video recording device that can receive and record a digital broadcasting in which electronic program guide (EPG) data are multiplexed into video and audio information and a mobile terminal that that can receive the digital broadcasting are connected in a one-way or two-way communication mode,
wherein the mobile terminal transmits information containing receiving channel information used to operate the video recording device to the video recording device, and
the video recording device refers the receiving channel sent from the mobile terminal, specifies the program based on the electronic program guide (EPG) data, and executes at least one of a process of video-recording the specified program, a process of saving recorded data, a process of playing the program, and a process of transmitting the played program data to the mobile terminal device,
wherein, when the video recording device receives the video recording start command from the mobile terminal and also a broadcast time zone of the program instructed by the video recording start command overlaps with a time zone of the preset video recording setting, the video recording device transmits the channel information of the program requested by the preset video recording setting to the mobile terminal,
the mobile terminal refers the transmitted channel information of the program requested by the preset video recording setting, acquires program information based on the electronic program guide (EPG) data, and offers the acquired program information to the user, and then transmits the video recording setting cancel command to the video recording device when the user decides that the video recording start command being sent previously takes precedence as a result of the offer or transmits the video recording end command to the video recording device when the user decides that the preset video recording setting takes precedence, and
the video recording device cancels the preset video recording setting and starts the video recording of the program in compliance with the video recording start command from the mobile terminal when the video recording device received the video recording setting cancel command from the mobile terminal, and invalidates the video recording start command being received in advance and ends the video recording when the video recording device received the video recording end command from the mobile terminal.

**7.** (Amended) A video program recording/playing system constructed such that a video recording device that can receive and record a digital broadcasting in which electronic program guide (EPG) data are multiplexed into video and audio information and a mobile terminal that that can receive the digital broadcasting are connected in a one-way or two-way communication mode,
wherein the mobile terminal transmits information containing receiving channel information used to operate the video recording device to the video recording device, and
the video recording device refers the receiving channel sent from the mobile terminal, specifies the program based on the electronic program guide (EPG) data, and executes at least one of a process of video-recording the specified program, a process of saving recorded data, a process of playing the program, and a process of transmitting the played program data to the mobile terminal device,
wherein, when the video recording device receives the video recording start command from the mobile terminal and also a rear end portion of a broadcast time zone of the program instructed by the video recording start command containing an end time point overlaps with a front end portion of a time zone of the preset video recording setting containing a start time point, the video recording device transmits the channel information of the program requested by the preset video recording setting to the mobile terminal,
the mobile terminal refers the transmitted channel information of the program requested by the preset video recording setting, acquires program information based on the electronic program guide (EPG) data, and offers the acquired program information to the user, and then retransmits the corrected video recording start time of the program requested by the preset video recording setting or the corrected video recording end time of the program instructed by the video recording start command when the user corrects the video recording start time of the program requested by the preset video recording setting as a result of the offer or when the user corrects the video recording end time of the program instructed by the video recording start command, and
when the video recording device received the corrected video recording start time of the program requested by the preset video recording setting or the corrected video recording end time of the program instructed by the video recording start command from the mobile terminal, the video recording device corrects correspondingly the video recording start time of the program requested by the preset video recording setting or the video recording end time of the program instructed by the video recording start command.

**8.** (Deleted)

**9.** (Deleted)

**10.** (Deleted)

**11.** (Deleted)

**12.** (Deleted)

**13.** (Deleted)

**14.** (Deleted)

**15.** (Added) A video recording method for video recording a digital broadcasting through communicating between a video recording device that receives and records the digital broadcasting in which electronic program guide (EPG) data are multiplexed with video and audio information and a mobile terminal that that receives the digital broadcasting, comprising:
a step in which the mobile terminal transmits a receiving channel information and a recording start command;
a step in which the video recording device receives the receiving channel information and the recording start command;
a step in which, when the vide recording device is executing a preset video recording at a point of time the video recording device received the video recording start command, the video recording device transmits a channel information in preset-video-recording to the mobile terminal;
a step in which the mobile terminal receives the channel information in preset-video-recording;
a step in which the mobile terminal receives an electronic program guide (EPG) data;
a step in which the mobile terminal specify a program in video-recording based on the channel information in preset-video-recording and the electronic program guide (EPG) data; and
a step in which the mobile terminal displays an information of the program in video-recording on a display.

**16.** (Added) The video recording method according to claim 15, comprising:
a step in which the mobile terminal transmits a re-recording start command;
a step in which the video recording device receives the re-recording start command; and
a step in which the video recording device ends the video recording and starts to video record a digital broadcasting of the receiving channel information.

**17.** (Added) The video recording method according to claim 16, comprising:
a step in which the video recording device receives electronic program guide (EPG) data;
a step in which the video recording device specifies a broadcasting program based on the channel information and the electronic program guide (EPG) data, and estimate an end time;
a step in which the video recording device ends video recording a program of the receiving channel information at the end time.

**18.** (Added) A video recording method for video recording a digital broadcasting by communicating between a video recording device that receives and records the digital broadcasting in which electronic program guide (EPG) data are multiplexed into video and audio information and a mobile terminal that that receives the digital broadcasting, comprising:
a step in which the mobile terminal transmits a receiving channel information and a recording start command;
a step in which the video recording device receives the receiving channel information and the recording start command;
a step in which the mobile terminal receives an electronic program guide (EPG) data;
a step in which the video recording device specify a broadcasting program in video-recording based on the receiving channel information and the electronic program guide (EPG) data, and estimate an end time;
a step in which the video recording device determines whether a preset video recording program which starts prior to the end time, exists,
a step in which, if the preset video recording program exists, the video recording device transmits an information of the preset video recording program to the mobile terminal, and
a step in which the mobile terminal displays the information of the preset video recording program on the display.

**19.** (Added) The video recording method according to claim 18, comprising:
a step in which the mobile terminal transmits a re-recording start command;
a step in which the video recording device receives the re-recording start command; and
a step in which the video recording device removes the preset video recording program, and start video recording a digital broadcasting of the receiving channel information.

**20.** (Added) The video recording method according to claim 19, comprising:
a step in which the video recording device ends video recording the digital broadcasting of the receiving channel information at the end time.

**21.** (Added) The video recording method according to claim 18, comprising:
a step in which the mobile terminal transmits a recording start designation time information of the preset video recording program and a re-recording start command,
a step in which the video recording device receive the recording start designation time information and re-recording start command,
a step in which the video recording device changes a start time of the preset video recording program to a time of the recording start designation time information,
a step in which the video recording device starts video recording of a digital broadcasting of the receiving channel information.

**22.** (Added) The video recording method according to claim 18, comprising:
a step in which the mobile terminal transmits re-recording start command and a recording end designation time;
a step in which the video recording device starts video recording a digital broadcasting of the receiving channel information;
a step in which the video recording device ends at the end time; and
a step of starting video recording a digital broadcasting of the receiving channel information.
